(19) Europäisches Patentamt
European Patent Office
Office européen des brevets

(11) EP 2 112 190 A1

(12) EUROPEAN PATENT APPLICATION

(43) Date of publication:
**28.10.2009 Bulletin 2009/44**

(21) Application number: **09158340.1**

(22) Date of filing: **21.04.2009**

(51) Int Cl.:
***C08J 3/03*** *(2006.01)* ***C08K 5/00*** *(2006.01)*
***C09B 67/00*** *(2006.01)* ***C09D 11/00*** *(2006.01)*
***C09D 17/00*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **21.04.2008 JP 2008110136**

(71) Applicant: **Fujifilm Corporation**
**Tokyo 106-8620 (JP)**

(72) Inventors:
- **Sano, Satoshi**
  **Shizuoka 418-8666 (JP)**
- **Ono, Michio**
  **Kanagawa 258-8577 (JP)**

(74) Representative: **HOFFMANN EITLE**
**Patent- und Rechtsanwälte**
**Arabellastrasse 4**
**81925 München (DE)**

(54) **Water-insoluble colorant dispersion and production method thereof, and recording liquid, ink set, printed article, image-forming method and image-forming apparatus using the same**

(57) A method of producing a water-insoluble colorant dispersion, having the steps of:
providing a solution of a water-insoluble colorant dissolved in an aprotic watersoluble organic solvent in the presence of an alkali,
providing an aqueous medium of a polymer compound dissolved therein, which polymer compound has at least one acid group selected from the group consisting of a carboxylic acid group, a sulfonic acid group, a hydroxyl group, and a phosphoric acid group, as its hydrophilic group, and
bringing the solution and the aqueous medium in contact with each other, to form fine particles of the water-insoluble colorant in a medium including water, thereby obtaining a dispersion including the fine particles dispersed therein.

EP 2 112 190 A1

## Description

FIELD OF THE INVENTION

The present invention relates to a dispersion of a water-insoluble colorant and a production method of the dispersion, and a recording liquid, ink set, printed article (printed matter), image-forming method and image-forming apparatus using the dispersion.

BACKGROUND OF THE INVENTION

According to an inkjet recording method, high speed recording can be performed with a high freedom degree of imaging pattern and a low noise at the time of recording. Further, image recording can be performed at low cost. Still further, the inkjet recording method has advantages such that color recording can be readily performed. Therefore, recently the inkjet recording method is rapidly spreading and further developing. As a recording liquid for the method, hitherto a dye ink, in which a water-soluble dye is dissolved in an aqueous medium, has been widely used. However, the dye ink is poor in water resistance and weather resistance of the resultant printed article. Therefore, studies of the dye ink have been made to improve such disadvantages.

A pigment ink is ordinarily obtained by dispersing a water-insoluble pigment in an aqueous medium. Hitherto, it is general to use a method which includes adding a pigment together with one or plurality of dispersing agents such as various kinds of surfactants or water-soluble polymers to an aqueous solvent, and pulverizing them using a dispersing device such as a sand mill, a bead mill, or a ball mill, to make the diameter of the pigment particle fine (breakdown method). Besides, it is proposed to make a pigment into a solid solution thereof, in consideration of improving a coloring force and weather resistance.

In contrast to the above, also disclosed is a method for preparing a pigment dispersion by dissolving an organic pigment and a polymer dispersant or a polymer compound as dispersant in an aprotic organic solvent in the presence of alkali and mixing the solution with water, as a build-up method in which pigment particles and others are formed in a liquid-phase (see JP-A-2004-43776 ("JP-A" means unexamined published Japanese patent application)). Further, studies have been made of the predetermined polymer compounds and the like that are used in the above-described build-up method (see JP-A-2003-26972, JP-A-2003-113341, JP-A- 2006-342316, and JP-A- 2007-119586).

Also worth noting is that the method disclosed in JP-A-2004-43776 co-dissolves a surfactant and a polymer compound, and a water-insoluble colorant in the presence of alkali and an aprotic organic solvent, and injects the resultant mixed solution into an aqueous medium, thereby causing precipitation of particles of nanometer size. However, a large amount of aqueous medium is necessary for obtaining a fine-particle dispersion by this method. In addition, for the purpose of allowing the surfactant or polymer compound to co-dissolve with a pigment, an extreme basic condition is necessary. Accordingly, this method has such a problem that the condition is inappropriate for use of a general purpose polymer compound having an ester bond (e.g. acrylate).

On the other hand, JP-A-2003-26972 and JP-A-2003-113341 disclose methods of: injecting a pigment-dissolved solution into a poor solvent added with a low molecular compound surfactant or a water-soluble polymer compound, in particular, causing particles of nanometer size to precipitate, and obtaining dispersions by desalination and concentration. However, with a method involving desalination and concentrating, it is difficult to remove residual salts and/or organic solvent used for dissolving the pigment. In addition, because the viscosity of the solution increases as the concentration advances due to the use of the highly water-soluble surfactant and/or polymer compound, the filtration filter is liable to clog so that the productivity deteriorates. Accordingly, it has not been possible to improve performance factors such as ink storage stability, ink head clogging and so on sufficiently for use as ink-jet ink.

Further, JP-A-2007-119586 discloses a method for obtaining a liquid composition containing fine pigment particles in a dispersed state, by controlling the solubility of the dispersing agent with respect to the solvent, in addition to utilizing a specific solvent. However, a special blocked copolymer must be used in this method. In addition, at the time of carrying out dialysis and concentration in order to obtain a dispersion liquid of high concentration, the aprotic polar solvent used in dissolving the pigment is hard to remove, and thus further improvement is required.

SUMMARY OF THE INVENTION

The present invention resides in a method of producing a water-insoluble colorant dispersion, having the steps of:

providing a solution of a water-insoluble colorant dissolved in an aprotic water-soluble organic solvent in the presence of an alkali,
providing an aqueous medium of a polymer compound dissolved therein, which polymer compound has at least one acid group selected from the group consisting of a carboxylic acid group, a sulfonic acid group, a hydroxyl group,

and a phosphoric acid group, as its hydrophilic group, and
bringing the solution and the aqueous medium in contact with each other, to form fine particles of the water-insoluble colorant in a medium including water, thereby obtaining a dispersion comprising the fine particles dispersed therein.

The present invention further resides in a dispersion of a water-insoluble colorant obtained by the above method, which contains the fine particles of the water-insoluble colorant, the alkali, and the polymer compound having an acid group.

The present invention further resides in a dispersion of a water-insoluble colorant obtained by the above method, wherein the fine particles containing the water-insoluble colorant show a color same as to that shown by the fine particles themselves in the state of crystals thereof, and wherein when the absorbance peak of the dispersion in a visible light region is set to 1, a light scattering intensity is 30,000 cps or less.

The present invention further resides in a recording liquid produced by using the above dispersion of a water-insoluble colorant, wherein the water-insoluble colorant is contained in an amount of 0.1 to 20% by mass with respect to a total mass of the recording liquid.

The present invention further resides in an ink set, which contains the above recording liquid.

The present invention further resides in a printed article having an image recorded thereon by a provider of, with a medium, the above recording liquid, or the recording liquid by using the above ink set, wherein the provider has a function to adjust an applied amount or concentration of the recording liquid, thereby light-to-dark contrast of the printed article is adjusted.

The present invention further resides in an image-forming method, which has:

providing, with a medium, the above recording liquid, or the recording liquid by using the above ink set; and
recording an image with the recording liquid.

The present invention further resides in an image-forming apparatus, having a recorder of an image, by providing, with a medium, the recording liquid, or the recording liquid by using the ink set.

Other and further features and advantages of the invention will appear more fully from the following description.

## DETAILED DESCRIPTION OF THE INVENTION

According to the present invention, there is provided the following means:

(1) A method of producing a water-insoluble colorant dispersion, comprising the steps of:

providing a solution of a water-insoluble colorant dissolved in an aprotic water-soluble organic solvent in the presence of an alkali,
providing an aqueous medium of a polymer compound dissolved therein, which polymer compound has at least one acid group selected from the group consisting of a carboxylic acid group (or carboxyl group, -COOH), a sulfonic acid group (i.e. a group derived from a sulfonic acid), a hydroxyl group (-OH), and a phosphoric acid group (or phosphate group, $-OPO_3H$), as its hydrophilic group, and
bringing the solution and the aqueous medium in contact with each other, to form fine particles of the water-insoluble colorant in a medium including water, thereby obtaining a dispersion comprising the fine particles dispersed therein.

(2) The method of producing a water-insoluble colorant dispersion as described in the above item (1), wherein the polymer compound is water-insoluble but is water-soluble in the presence of alkali.
(3) The method of producing a water-insoluble colorant dispersion as described in the above item (1) or (2), wherein the polymer compound has at least one repeating unit represented by formula (I):

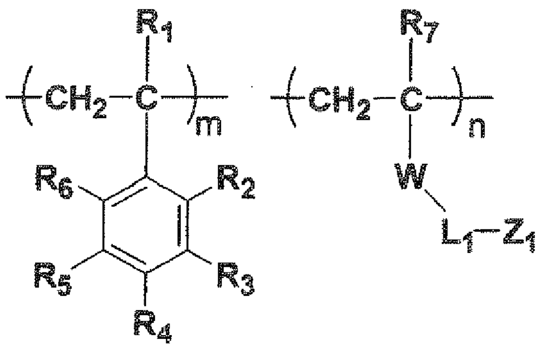

Formula (I)

wherein W represents a single bond or a divalent linking group selected from the group consisting of -CO-, -COO-, $-CONR_8-$, -OCO-, and an arylene group; $L_1$ represents a single bond or a divalent linking group, $R_1$ to $R_8$ each independently represents a hydrogen atom or a substituent; $Z_1$ represents any one of the carboxylic acid group, the sulfonic acid group, the hydroxyl group and the phosphoric acid group; and m and n each represents a copolymerization ratio.

(4) The method of producing a water-insoluble colorant dispersion as described in any one of the above items (1) to (3), wherein either or both of the alkalis contained in the solution of the water-soluble colorant and in the aqueous medium is an organic base.

(5) The method of producing a water-insoluble colorant dispersion as described in any one of the above items (1) to (3), further comprising the steps of:

forming flocculated aggregates (soft aggregates) of the fine particles of the water-insoluble colorant, said flocculated aggregates being flocculated and capable of being re-dispersed;
separating the flocculated aggregates from the dispersion;
disaggregating the flocculated aggregates; and
re-dispersing the fine particles into a re-dispersion medium.

(6) The method of producing a water-insoluble colorant dispersion as described in any one of the above items (1) to (4), further comprising the step of:

adding an alkali in the re-dispersing step of the fine particles into the re-dispersion medium by disaggregating the flocculated aggregates.

(7) The method of producing a water-insoluble colorant dispersion as described in any one of the above items (1) to (6), wherein the re-dispersion medium is an aqueous dispersion containing water.

(8) The method of producing a water-insoluble colorant dispersion as described in any one of the above items (1) to (7), further comprising the step of:

heating the dispersion.

(9) A dispersion of a water-insoluble colorant obtained by the method as described in any one of the above items (1) to (8), comprising the fine particles of the water-insoluble colorant, the alkali, and the polymer compound having an acid group.

(10) A dispersion of a water-insoluble colorant obtained by the method as described in any one of the above items (1) to (8), wherein the fine particles containing the water-insoluble colorant show a color same as to that shown by the fine particles themselves in the state of crystals thereof, and wherein when the absorbance peak of the dispersion in a visible light region is set to 1, a light scattering intensity is 30,000 cps or less.

(11) The dispersion of a water-insoluble colorant as described in the above items (9) or (10), wherein the average particle diameter of the fine particles containing the water-insoluble colorant is from 5 to 60 nm.

(12) The dispersion of a water-insoluble colorant as described in any one of the above items (9) to (11), wherein the water-insoluble colorant is a pigment.

(13) The dispersion of a water-insoluble colorant as described in any one of the above items (9) to (12), wherein the water-insoluble colorant is an organic pigment selected from the group consisting of quinacridone compound pigments, diketopyrrolopyrrole compound pigments, mono azo yellow organic pigments, condensed azo organic pigments, quinophthalone compound pigments, benzimidazolone compound pigments, and disazo yellow pigments.
(14) The dispersion of a water-insoluble colorant as described in any one of the above items (9) to (13), wherein the water-insoluble colorant is an organic pigment selected from the group consisting of quinacridone compound pigments, diketopyrrolopyrrole compound pigments, and azo yellow organic pigments.
(15) The dispersion of a water-insoluble colorant as described in any one of the above items (9) to (14), wherein the water-insoluble colorant is an azo yellow organic pigment.
(16) A recording liquid produced by using the dispersion of a water-insoluble colorant as described in any one of the above items (9) to (15), wherein the water-insoluble colorant is contained in an amount of 0.1 to 20% by mass with respect to a total mass of the recording liquid.
(17) The recording liquid as described in the above item (16), wherein the recording liquid is an inkjet recording liquid.
(18) An ink set, comprising the recording liquid as described in the above item (16) or (17).
(19) A printed article having an image recorded thereon by a provider of, with a medium, the recording liquid as described in the above item (16) or (17), or the recording liquid by using the ink set as described in the above item (18), wherein the provider has a function to adjust an applied amount or concentration of the recording liquid, thereby light-to-dark contrast of the printed article is adjusted.
(20) An image-forming method, which comprises:

providing, with a medium, the recording liquid as described in the above item (16) or (17), or the recording liquid by using the ink set as described in the above item (18); and
recording an image with the recording liquid.

(21) An image-forming apparatus, having a recorder of an image, by providing, with a medium, the recording liquid as described in the above item (16) or (17), or the recording liquid by using the ink set as described in the above item (18).

In the following, the present invention will be explained in detail, but it should be noted that the present invention is not strictly interpreted by limiting to the following description.

The present invention provides a method of producing a water-insoluble colorant dispersion, which method comprises the steps of: allowing a solution which is prepared by dissolving a water-insoluble colorant into an aprotic water-soluble organic solvent in the presence of an alkali, and an aqueous medium which is prepared by dissolving a polymer compound having at least one kind of acid group selected from the group consisting of a carboxylic acid group, a sulfonic acid group, a hydroxyl group and a phosphoric acid group as its hydrophilic group, to contact with each other; generating fine particles of the water-insoluble colorant in a medium containing water; and obtaining a dispersion in which the fine particles are dispersed.

Although the alkali to be used in the production method of the present invention is not particularly restricted, it is preferable that the alkali cause the water-insoluble colorant such as an organic pigment or so and a polymer compound dissociate and dissolve in the aprotic organic solvent. For example, hydroxide of alkali metal, alkoxide of alkali metal, hydroxide of alkaline-earth metal, alkoxide of alkaline-earth metal, and organic strong base may preferably be used in terms of high solubilizing ability for the water-insoluble colorant (organic pigment). Examples thereof include lithium hydroxide, sodium hydroxide, potassium hydroxide, calcium hydroxide, potassium tert-butoxide, potassium methoxide, potassium ethoxide, sodium methoxide, potassium ethoxide, quaternary ammonium compounds such as tetramethylammonium hydroxide and tetrabutylammonium hydroxide; 1,8-diazabicyclo[5.4.0]-7-undecene, 1,8-diazabicyclo[4.3.0]-7-nonene, and guanidine. Further, only one kind of alkali may be used, or, alternatively, two or more kinds of alkalis may be used in combination. A ratio of the base to be used is not particularly limited, and it is preferably from 1.0 to 30 mol equivalent, more preferably from 1.0 to 25 mol equivalent, further preferably from 1 to 10 mol equivalent, and particularly preferably from 1 to 5 mol equivalent, with respect to the water-insoluble colorant. It is preferable that the addition amount of the alkali to the polymer compound is from 1.0 to 20 mol equivalents, more preferably from 1.0 to 15 mol equivalent, further preferably from 1 to 10 mol equivalent, and particularly preferably from 1 to 5 mol equivalent, with respect to the mole equivalent of the carboxylic acid group, sulfonic acid group, hydroxyl group or phosphoric acid group contained in the polymer compound.

Regarding the aprotic water-soluble organic solvent to be used for the production method of the present invention, any solvent is usable, as long as it is capable of dissolving the water-insoluble colorant and the polymer compound in the presence of the alkali. Herein, the term "water-soluble" means a capability of dissolving a target substance to be dissolved at least 1% by mass (10 g/L) into a neutral water at the ordinary temperature, and the solubility into water at 25 °C is preferably from 1 to 100% by mass, more preferably from 5 to 100% by mass. The term "aprotic" means that

the organic solvent does not have any proton donative property. It is preferable that the aprotic water-soluble organic solvent has the solubility of 5% by mass or more with respect to water, and further preferably it freely mixes with water.

Specifically, preferable examples of the aprotic water-soluble organic solvent include dimethylsulfoxide, dimethylimidazolidinone, sulfolane, N-methyl pyrrolidone, dimethylformamide, N,N-dimethylacetoamide, acetonitrile, acetone, dioxane, tetramethylurea, hexamethylphosphoramide, hexamethylphosphorotriamide, pyridine, propionitrile, butanone, cyclohexanone, tetrahydrofuran, tetrahydropyran, ethyleneglycol diacetate, and $\gamma$-butyrolactone. Of these solvents, dimethylsulfoxide, N-methyl pyrrolidone, dimethylformamide, N,N-dimethylacetoamide, dimethylimidazolidinone, sulfolane, acetone, acetonitrile, and tetrahydrofuran are preferable; and dimethylsulfoxide and N-methyl pyrrolidone are more preferable. Further, these solvents may be used singly or two or more of those can be used in combination. In addition, it is also preferable to be used in combination with a surfactant. A proportion of the aprotic solvent to be used is not particularly limited. It is preferred to use the solvent in the proportion of 2 parts by mass to 500 parts by mass, more preferably from 5 parts by mass to 100 parts by mass, with respect to 1 part by mass of the water-insoluble colorant respectively, for the purpose of keeping the water-insoluble colorant in still better dissolution state, of forming the fine particles of desired particle diameter immediately, and of achieving favorable color density of the resultant aqueous dispersion.

In the present invention, the "aqueous medium" refers to water alone, or a mixed solvent of water and an organic solvent soluble in water. The addition of the organic solvent is preferably applied, for example, (i) in the case where a single use of water is not sufficient for uniformly dissolving the water-insoluble colorant, e.g. a pigment, and the polymer compound, i.e. as a dispersing agent, (ii) in the case where a single use of water is not sufficient for obtaining a viscosity required for flowing through a flow path, and the like. In the case of alkaline, for example, the organic solvent is preferably an amide-compound solvent or a sulfur-containing compound solvent, more preferably the sulfur-containing-compound solvent, and particularly preferably dimethylsulfoxide (DMSO). In order to obtain a homogeneous aqueous medium, it is preferable to add an alkali and an aqueous medium to a polymer compound (which will be described later) dissolved in an organic solvent beforehand. Additionally, an inorganic compound salt or a dispersing agent which will be described later may be further dissolved into the aqueous medium as occasion demands.

As the foregoing description, in the production method of the present invention, the dispersion according to the present invention is formed with the aqueous medium which is made to contain a polymer compound having, as the hydrophilic group, at least one kind of acid group selected from the group consisting of a carboxylic acid group, a sulfonic acid group, a hydroxyl group, and a phosphoric acid group. As a specific example of the polymer compound, it is preferable to use a polymer compound which is soluble in an aqueous medium in the presence of alkali, and which exerts dispersing effect by forming water-insoluble-colorant-containing particles in the aqueous medium when a solution in which a water-insoluble colorant is dissolved and an aqueous medium in which a polymer compound is dissolved, are allowed to mix with each other. Regarding a preferable embodiment of the polymer compound in light of its solubility (being soluble or insoluble), it is preferred that the polymer compound dissolve at least 1% by mass (10 g/L) in water that contains an alkali in an equivalent amount necessary for neutralizing the acid group present in the polymer compound, and at least 5% by mass is further preferred.

It is preferable that the polymer compound has a hydrophilic part having the acidic group as its hydrophilic group and separately has a hydrophobic part in the same molecule. In the present invention, as the polymer compound, use can be preferably made of any of polymer compounds obtained from monomers appropriately selected from the below shown (A) to (K), or copolymers obtained as a result of combination of these monomers. Examples of the monomers include (A) monomers, such as (meth)acrylic acid, maleic acid, itaconic acid, fumaric acid. $\beta$-CEA, styrenesulfonic acid, vinylsulfonic acid, 4-vinylbenzenesulfonic acid, allylsulfonic acid, 3-(meth)acryloyloxypropanesulfonic acid, 2-methylallylsulfonic acid, 2-(meth)acryloyloxyethanesulfonic acid, 2-acrylamido-2-methylpropanesulfonic acid, mono{2-(meth)acryloyloxyethyl}acid phosphate, and 2-methacryloxyethylphosphonic acid, and their salts; (B) $\alpha$-olefinic aromatic hydrocarbon monomers having 8 to 20 carbon atoms, such as styrene, 4-methylstyrene, 4-ethylstyrene, vinylnaphthalene, vinylnaphthalene derivatives; (C) vinylester monomers having 3 to 20 carbon atoms, such as vinyl acetate and vinyl propionate; (D) olefin carboxylate monomers having 4 to 20 carbon atoms, such as methyl methacrylate, ethyl methacrylate, propyl methacrylate, butyl methacrylate, benzyl methacrylate, 2-ethylhexyl methacrylate, stearyl methacrylate, methyl acrylate, ethyl acrylate, butyl acrylate, benzyl acrylate, 2-ethylhexyl acrylate, methyl crotonate, and ethyl crotonate; (E) vinylic aromatic amine monomers having 8 to 20 carbon atoms, such as 4-vinylpyridine, and 4-vinyl aniline; (F) vinylic amide compound monomers having 3 to 20 carbon atoms, such as acrylamide, methacrylamide, and benzyl methacrylamide; (G) olefin phenol monomers having 8 to 20 carbon atoms, such as 4-vinylphenol; and (H) dienic compound monomers having 4 to 20 carbon atoms, such as butadiene, and isoprene, (I) polyfunctional monomers, (J) macromonomers, and (K) other monomers and derivatives thereof. It is preferable to make the polymer compound function as a dispersing agent of the fine particles of water-insoluble colorant. Only one kind of the polymer compound may be used, or, alternatively, two or more kinds of the polymer compounds may be used in combination.

Regarding a ratio between the hydrophilic part (i.e. a repeating unit having the hydrophilic group) and the hydrophobic part (i.e. a repeating unit having no hydrophilic group), it is not particularly limited so long as being capable

of stabilizing the dispersion of the present invention. When the part dissociated by alkali is specified with an acid value in terms of the amount (unit: mg) of potassium hydroxide necessary for neutralizing the dissociated part per g of sample, the hydrophilic part in the polymer compound is preferably contained within the range of 50 mg to 500 mg, further preferably within the range of 100 mg to 250 mg, and more preferably within the range of 150 mg to 200 mg.

The range of the ratio of the hydrophilic part and the hydrophobic part is not particularly limited so long as stably achieving dissolution together with an organic pigment, in an aprotic organic solvent in the presence of alkali. When as the polymer compound, a polymer having much hydrophobic monomer component is used, it sometimes becomes difficult to impart good dispersion stability to a water-insoluble colorant. It should be noted that the term "hydrophilic" means a good affinity with water and a high water solubility, whereas the "hydrophobic" means a poor affinity with water and a sparse water solubility.

Furthermore, as the polymer compounds having as its hydrophilic group at least one group selected from the group consisting of a carboxylic acid group, a sulfonic acid group, a hydroxyl group and a phosphoric acid group, it is preferable to use the polymer compound which is a copolymer with: a monomer (L) having any of the above-mentioned acidic group's salt as the composing component; a vinyl ether macromonomer (M) having a polyether chain (e.g., polyoxyethylenealkyl ether, polyoxyethylene higher fatty acid ester, and polyoxyethylenealkyl phenyl ether) at the side-chain, and/or a hydrophilic monomer (N), such as allyl ethers. Regarding the polymerization method, there is no limitation, in particular, generally in any of radical polymerization, ionic polymerization, living polymerization, and coordinating polymerization; with any of solutions as the medium; and measure such as bulk, emulsification. The radical polymerization with solution is preferable from the viewpoint of convenience in operation.

The acid group (substituent) of the above polymer compound is a carboxylic acid group, a sulfonic acid group, a hydroxyl group, or a phosphoric acid group, of those preferably a carboxylic acid group or a sulfonic acid group, and more preferably a carboxylic acid group.

The above polymer compound may be a copolymer which has any form of block-copolymer, random copolymer, or graft copolymer. Use of the block-copolymer, or graft copolymer is especially preferable since those copolymers readily impart a favorable dispersibility to a water-insoluble colorant.

It is preferable that the above polymer compound has a repeating unit represented by formula (I). The repeating unit represented by formula (I) will be described in detail below.

In formula (I), $L_1$ represents a single bond or a divalent linking group. Examples of the divalent linking group represented by $L_1$ include a straight-chain, branched or cyclic alkylene group (preferably an alkylene group having 1 to 30 carbon atoms, more preferably 1 to 12 carbon atoms, and further preferably 1 to 4 carbon atoms, e.g., methylene, ethylene, propylene, butylene, pentylene, hexylene, octylene, and decylene), an aralkylene group (preferably an aralkylene group having 7 to 30 carbon atoms, and more preferably 7 to 13 carbon atoms, e.g., benzylidene and cinnamylidene), and an arylene group (preferably an arylene group having 6 to 30 carbon atoms, and more preferably 6 to 15 carbon atoms, e.g., phenylene, cumenylene, mesitylene, tolylene and xylylene). These groups may be further substituted with a substituent.

$L_1$ is preferably a single bond, an alkylene group, or an arylene group; more preferably a single bond or an alkylene group; and further preferably a single bond.

$R_1$ to $R_8$ each independently represents a hydrogen atom or a substituent. When it represents the substituent, any one selected from the substituent group A shown below can be used. That is, as examples of the substituent, the substituent group A include an alkyl group (preferably an alkyl group having 1 to 30 carbon atoms, more preferably 1 to 20 carbon atoms, and particularly preferably 1 to 10 carbon atoms, e.g., methyl, ethyl, isopropyl, tert-butyl, n-octyl, n-decyl, n-hexadecyl), a cycloalkyl group (preferably a cycloalkyl group having 3 to 30 carbon atoms, more preferably 3 to 20 carbon atoms, and particularly preferably 3 to 10 carbon atoms, e.g., cyclopropyl, cyclopentyl, cyclohexyl), an alkenyl group (preferably an alkenyl group having 2 to 30 carbon atoms, more preferably 2 to 20 carbon atoms, and particularly preferably 2 to 10 carbon atoms, e.g., vinyl, allyl, 2-butenyl, 3-pentenyl), an alkynyl group (preferably an alkynyl group having 2 to 30 carbon atoms, more preferably 2 to 20 carbon atoms, and particularly preferably 2 to 10 carbon atoms, e.g., propargyl, 3-pentynyl), an aryl group (preferably an aryl group having 6 to 30 carbon atoms, more preferably 6 to 20 carbon atoms, and particularly preferably 6 to 12 carbon atoms, e.g., phenyl, p-methylphenyl, naphthyl, anthranyl), an amino group (preferably an amino group having 0 to 30 carbon atoms, more preferably 0 to 20 carbon atoms, and particularly preferably 0 to 10 carbon atoms, e.g., amino, methylamino, dimethylamino, diethylamino, dibenzylamino, diphenylamino, ditolylamino), an alkoxy group (preferably an alkoxy group having 1 to 30 carbon atoms, more preferably 1 to 20 carbon atoms, and particularly preferably 1 to 10 carbon atoms, e.g., methoxy, ethoxy, butoxy, 2-ethylhexyloxy), an aryloxy group (preferably an aryloxy group having 6 to 30 carbon atoms, more preferably 6 to 20 carbon atoms, and particularly preferably 6 to 12 carbon atoms, e.g., phenyloxy, 1-naphthyloxy, 2-naphthyloxy), a heterocyclicoxy group (preferably a heterocyclicoxy group having 1 to 30 carbon atoms, more preferably 1 to 20 carbon atoms, and particularly preferably 1 to 12 carbon atoms, e.g., pyridyloxy, pyrazyloxy, pyrimidyloxy, quinolyloxy), an acyl group (preferably an acyl group having 1 to 30 carbon atoms, more preferably 1 to 20 carbon atoms, and particularly preferably 1 to 12 carbon atoms, e.g., acetyl, benzoyl, formyl, pivaloyl), an alkoxycarbonyl group (preferably an alkoxycarbonyl group having 2 to 30 carbon atoms, more preferably 2 to 20 carbon atoms, and particularly preferably 2 to 12 carbon atoms, e.g., methoxycarbonyl, ethoxycarbonyl), an aryloxycarbonyl group (preferably an aryloxycarbonyl group having 7 to 30 carbon atoms, more preferably 7 to 20 carbon atoms, and particularly preferably 7 to 12 carbon atoms, e.g., phenyloxycarbonyl), an acyloxy group (preferably an acyloxy group having 2 to 30 carbon atoms, more preferably 2 to 20 carbon atoms, and particularly preferably 2 to 10 carbon atoms, e.g., acetoxy, benzoyloxy), an acylamino group (preferably an acylamino group having 2 to 30 carbon atoms, more preferably 2 to 20 carbon atoms, and particularly preferably 2 to 10 carbon atoms, e.g., acetylamino, benzoylamino), an alkoxycarbonylamino group (preferably an alkoxycarbonylamino group having 2 to 30 carbon atoms, more preferably 2 to 20 carbon atoms, and particularly preferably 2 to 12 carbon atoms, e.g., methoxycarbonylamino), an aryloxycarbonylamino group (preferably an aryloxycarbonylamino group having 7 to 30 carbon atoms, more preferably 7 to 20 carbon atoms, and particularly preferably 7 to 12 carbon atoms, e.g., phenyloxycarbonylamino), a sulfonylamino group (preferably a sulfonylamino group having 1 to 30 carbon atoms, more preferably 1 to 20 carbon atoms, and particularly preferably 1 to 12 carbon atoms, e.g., methanesulfonylamino, benzenesulfonylamino), a sulfamoyl group (preferably a sulfamoyl group having 0 to 30 carbon atoms, more preferably 0 to 20 carbon atoms, and particularly preferably 0 to 12 carbon atoms, e.g., sulfamoyl, methylsulfamoyl, dimethylsulfamoyl, phenylsulfamoyl), a carbamoyl group (preferably a carbamoyl group having 1 to 30 carbon atoms, more preferably 1 to 20 carbon atoms, and particularly preferably 1 to 12 carbon atoms, e.g., carbamoyl, methylcarbamoyl, diethylcarbamoyl, phenylcarbamoyl), an alkylthio group (preferably an alkylthio group having 1 to 30 carbon atoms, more preferably 1 to 20 carbon atoms, and particularly preferably 1 to 12 carbon atoms, e.g., methylthio, ethylthio), an arylthio group (preferably an arylthio group having 6 to 30 carbon atoms, more preferably 6 to 20 carbon atoms, and particularly preferably 6 to 12 carbon atoms, e.g., phenylthio), a heterocyclicthio group (preferably a heterocyclicthio group having 1 to 30 carbon atoms, more preferably 1 to 20 carbon atoms, and particularly preferably 1 to 12 carbon atoms, e.g., pyridylthio, 2-benzimidazolylthio, 2-benzoxazolylthio, 2-benzothiazolylthio), a sulfonyl group (preferably a sulfonyl group having 1 to 30 carbon atoms, more preferably 1 to 20 carbon atoms, and particularly preferably 1 to 12 carbon atoms, e.g., mesyl, tosyl), a sulfinyl group (preferably a sulfinyl group having 1 to 30 carbon atoms, more preferably 1 to 20 carbon atoms, and particularly preferably 1 to 12 carbon atoms, e.g., methanesulfinyl, benzenesulfinyl), a ureido group (preferably a ureido group having 1 to 30 carbon atoms, more preferably 1 to 20 carbon atoms, and particularly preferably 1 to 12 carbon atoms, e.g., ureido, methylureido, phenylureido), a phosphoric acid amido group (preferably a phosphoric acid amido group having 1 to 30 carbon atoms, more preferably 1 to 20 carbon atoms, and particularly preferably 1 to 12 carbon atoms, e.g., diethylphosphoric acid amido, phenylphosphoric acid amido), a hydroxyl group, a mercapto group, a halogen atom (e.g., a fluorine atom, a chlorine atom, a bromine atom, an iodine atom; more preferably a fluorine atom), a cyano group, a sulfo group, a carboxyl group, an oxo group, a nitro group, a hydroxamic acid group, a sulfino group, a hydrazino group, an imino group, a heterocyclic group (preferably a heterocyclic group having 1 to 30 carbon atoms, and more preferably 1 to 12 carbon atoms; as hetero atoms, e.g., nitrogen, oxygen, sulfur; and specifically, e.g., imidazolyl, pyridyl, quinolyl, furyl, thienyl, piperidyl, morpholino, benzoxazolyl, benzimidazolyl, benzothiazolyl, carbazolyl, azepinyl), a silyl group (preferably a silyl group having 3 to 40 carbon atoms, more preferably 3 to 30 carbon atoms, and particularly preferably 3 to 24 carbon atoms, e.g., trimethylsilyl, triphenylsilyl), and a silyloxy group (preferably a silyloxy group having 3 to 40 carbon atoms, more preferably 3 to 30 carbon atoms, and particularly preferably 3 to 24 carbon atoms, e.g., trimethylsilyloxy, triphenylsilyloxy). These substituents may be further substituted with at least one substituent selected from the substituent group A.

In formula (I), W represents a single bond or a divalent linking group selected from the group consisting of -CO-, -COO-, $-CONR_8-$, -OCO- and an arylene group, preferably a single bond, -COO-, $-CONR_8-$, or an arylene group, more preferably a single bond, -COO-, $-CONR_8-$, and further preferably a single bond. $R_8$ represents a hydrogen atom or a substituent, and preferable examples of the substituent are those selected from the above mentioned substituent group A.

$Z_1$ represents any one among a carboxylic acid group, a sulfonic acid group, a hydroxyl group and a phosphoric acid group, preferably a carboxylic acid group or a sulfonic acid group, and more preferably a carboxylic acid group. m and n each represents a copolymerization ratio of the repeating units, and when there is no copolymerization component other than the repeating unit represented by formula (I), $(m + n) = 1$

The composition of the repeating unit whose copolymerization ratio is n in formula (I) corresponds to an acid value of the polymer compound having the repeating unit represented by formula (I), and the range of n changes depending on the molecular mass of the polymer compound. The acid value is preferably in the range of 65 to 250, and n is preferably 0.1 to 0.7 (m is 0.3 to 0.9), more preferably n is 0.2 to 0.6 (m is 0.4 to 0.8), and further preferably n is 0.3 to 0.6 (m is 0.4 to 0.7).

Next, an explanation will be made about preferred combinations of groups in formula (I). The following combination (a) is preferable, the following combination (b) is more preferable, and the following combination (c) is particularly preferable.

Combination (a)

$R_1$ to $R_7$: a hydrogen atom, an alkyl group, an aryl group, a cycloalkyl group, an alkenyl group, an alkynyl group, an alkoxy group, an aryloxy group, an acyl group, an alkoxycarbonyl group, an aryloxy carbonyl group, an acyl oxy group, an acylamino group, an alkoxycarbonylamino group, a carbamoyl group, a sulfonyl amino group, a sulfamoyl group, an alkylthio group, a ureido group, a hydroxyl group, a halogen atom, a cyano group, a carboxyl group, a heterocyclic group.

W: a single bond, -COO-, -CONR$_8$- or an arylene group
$R_8$: a hydrogen atom
$L_1$: a single bond, an alkylene group or an arylene group
$Z_1$: a carboxylic acid group or a sulfonic acid group

Combination (b)

$R_1$ and $R_7$: a hydrogen atom or an alkyl group
$R_2$ to $R_6$: a hydrogen atom, an aryl group, an alkenyl group, an alkynyl group, an alkoxy group, an aryloxy group, an acyl group, an alkoxycarbonyl group, an aryloxy carbonyl group, an acyl oxy group, an acylamino group, an alkoxycarbonylamino group, a sulfonyl amino group, a sulfamoyl group, an alkylthio group, a hydroxyl group, a halogen atom, a cyano group, a carboxyl group, a heterocyclic group.
W: a single bond, -COO-, or -CONR$_8$-
$R_8$: a hydrogen atom
$L_1$: a single bond or an alkylene group
$Z_1$: a carboxylic acid group

Combination (c)

$R_1$: a hydrogen atom
$R_3$: a hydrogen atom or an alkyl group
$R_2$ to $R_6$: a hydrogen atom, an alkenyl group, an aryl group, an alkoxy group, an acyl group, an alkoxycarbonyl group, an acylamino group, a sulfonyl amino group, a carboxyl group.
W: a single bond
$L_1$: a single bond
$Z_1$: a carboxylic acid group
Commercially available compounds in the market and compounds that are prepared individually may be also adequately used as the polymer compound containing the repeating unit represented by formula (I).

Specific examples of the polymer compound containing the repeating unit represented by formula (I) will be illustrated below, though the present invention is not limited thereto.

(1)

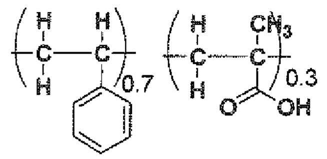

(6)

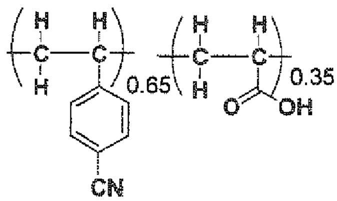

(2)

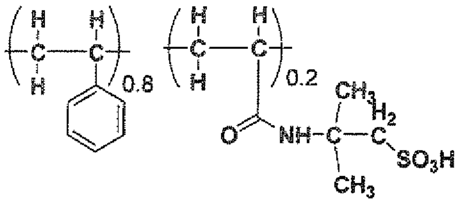

(7)

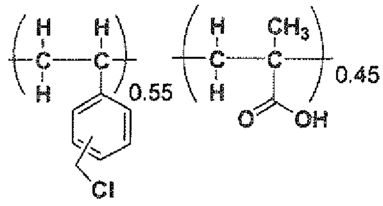

(3)

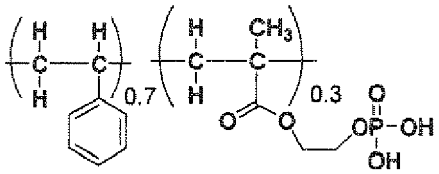

(8)

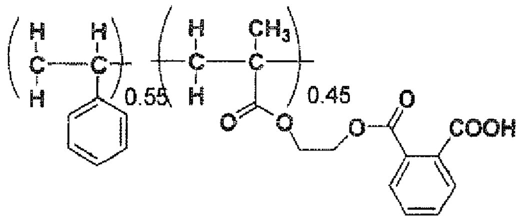

(4)

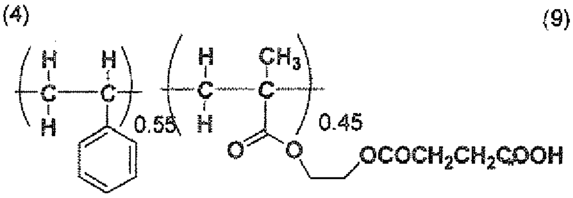

(9)

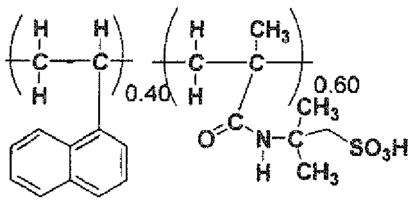

(5)

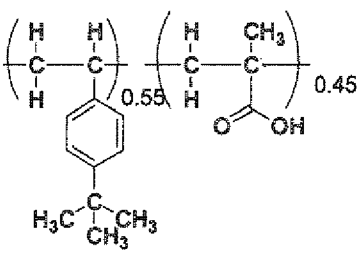

(10)

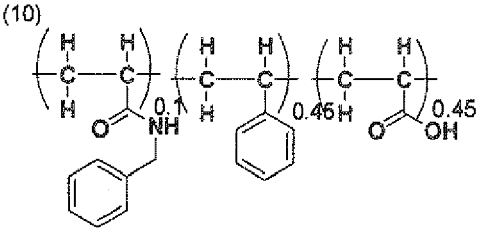

(11)

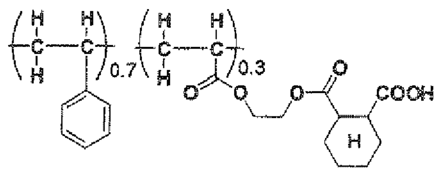

(12)

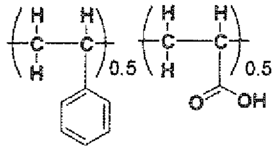

(13)

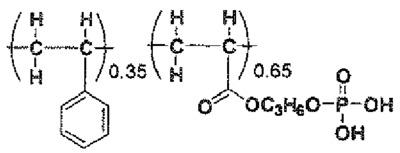

(14)

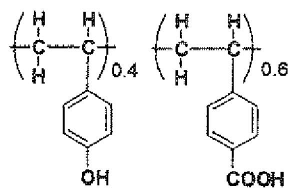

(15)

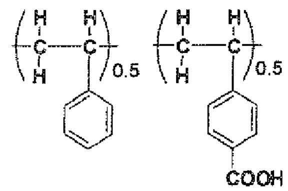

(16)

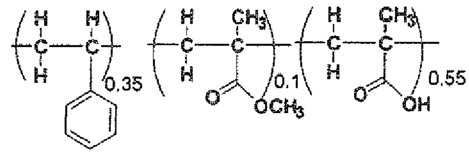

(17)

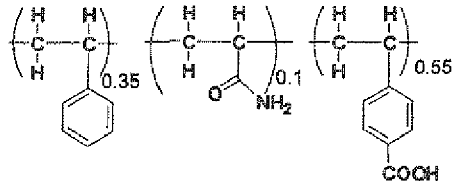

(18)

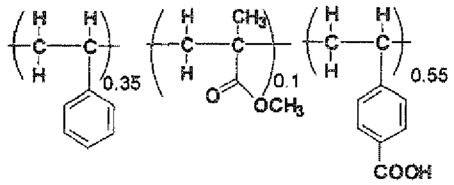

(19)

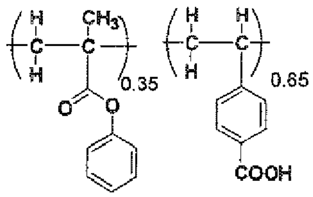

(20)

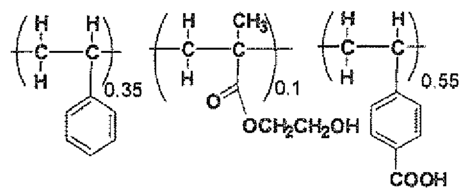

The content of the foregoing polymer compound is not particularly limited, and it is preferable to use the polymer compound within the range of 0.001 to 10 parts by mass, more preferably within the range of 0.01 to 4 parts by mass, and particularly preferably within the range of 0.1 to 2 parts by mass, with respect to 1 part by mass of the water-insoluble colorant in the viewpoints of further improving dispersion stability of the fine particles of the water-insoluble colorant and of achieving further favorable color density in the occasion of preparing the aqueous dispersion. The containing mode in the dispersion of the polymer compound having the acid group is not limited in particular, and either being contained independently from other component or being collectively contained together with another component may be suitable. Thus, in the present invention, the terminology "dispersion containing the water-insoluble colorant fine-particles together with the polymer compound" means that the polymer compound may be contained in the water-insoluble colorant fine-particles in the dispersion or may coexist separately from the fine particles in the dispersion. Accordingly, the state in which a part of the polymer compound may be in dissociation equilibrium between adsorption on and release from the fine particles, is also included in the above concept of containing mode.

The molecular mass of the polymer compound to be contained in the dispersion of the present invention or the molecular mass of the polymer compound that can be preferably contained in the dispersion is not particularly limited, but is preferably in the range of 500 to 1,000,000, and more preferably from 1,000 to 1,000,000 in terms of mass average molecular mass, respectively. When the molecular mass is too large, entanglement among polymeric chains becomes too large. As a result, it becomes difficult for them to serve as a dispersing agent, which occasionally makes it difficult to maintain a good dispersion state. It should be noted that when described simply as a molecular mass in the present

invention, the molecular mass means mass average molecular mass, and the mass average molecular mass, unless otherwise specified, means an average molecular mass calculated in terms of polystyrene that is measured by gel permeation chromatography (carrier: tetrahydrofuran).

It should be also noted that the term "dispersion" that is used in the present invention means a composition having prescribed fine-particles dispersed therein. The form of the dispersion is not particularly limited. The dispersion is used as a meaning to embrace a liquid composition (dispersion liquid), a past-like composition, and a solid composition.

For the purpose of further enhancing the stability of the dispersion of the present invention, another dispersing agent (e.g. a surfactant, a polymer dispersing agent) can be also added. Specifically, such a surfactant may be properly selected from any of known surfactants and derivatives thereof, including anionic surfactants, such as alkylbenzene sulfonic acid salts, alkylnaphthalene sulfonic acid salts, higher-fatty acid salts, sulfonic acid salts of higher fatty acid esters, sulfuric acid ester salts of higher alcohol ether, sulfonic acid salts of higher alcohol ether, alkylcarboxylic acid salts of higher alkylsulfonamide, and alkylphosphoric acid salts; nonionic surfactants, such as polyoxyethylene alkyl ethers, polyoxyethylenealkyl phenyl ethers, polyoxyethylene fatty acid esters, sorbitan fatty acid esters, ethyleneoxide adducts of acetylene glycol, ethyleneoxide adducts of glycerol, and polyoxyethylene sorbitan fatty acid esters; and in addition to the above, amphoteric surfactants, such as alkyl betaines and amido betaines; silicone-based surfactants, and fluorine-containing surfactants.

Specific examples of the polymer dispersing agent include polyvinyl pyrrolidone, polyvinyl alcohol, polyvinyl methyl ether, polyethylene oxide, polyethyleneglycol, polypropyleneglycol, and polyacrylamide. Among these, polyvinyl pyrrolidone is preferably used.

Although the highly hydrophilic polymer compound, such as polyvinylpyrrolidone or polyvinylpyrrolidone/vinylsulfonic acid copolymer, can be dissolved into water singly, a function of dispersion stabilization for the water-soluble colorant (particularly organic pigment) may become relatively lower due to the high hydrophilic property of the polymer compound. In addition, a mere use of these polymer compounds causes increase of the viscosity of the dispersion, so that the filtration property can become too bad to lower the productivity, in a step of ultrafiltration, concentration, or filtration of the flocculated aggregates (soft aggregates) after aggregating by acid.

In the present invention, even a polymer compound which is water-insoluble alone can be solubilized by addition of an appropriate alkali to the aqueous medium. Further, by bringing the aqueous medium into contact with the solution of water-insoluble colorant, it is possible to form fine particles under a special medium environment and to impart high dispersion stability. Further, in the present invention, as mentioned above, a polymer compound which is water-insoluble when used alone can be used and made to coexist as a dispersing agent, owing to the effects of alkali. Thus, the hydration contribution can be suppressed to a level smaller than in the case of merely using a highly hydrophilic water-soluble polymer compound. As a result, use of such a polymer compound is preferable for obtaining a dispersion with a low viscosity while maintaining sufficient stabilizing property with respect to the dispersion of the water-insoluble colorant fine-particles. The solubility of the polymer compound is preferably within the range of 0.001 to 5 parts by mass, more preferably within the range of 0.01 to 3 parts by mass, and further preferably within the range of 0.01 to 1 part by mass, with respect to 1 part by mass of water.

For the purpose of dissolving a pigment of poor solubility, a pigment solution is generally prepared using an aprotic polar solvent such as dimethylsulfoxide, adding a strong alkali, and heating to 50 to 60 °C, at a high concentration of pigment. Accordingly, in the case where a dispersing agent having an ester component such as, for example, benzyl methacrylate ($-CH_2-CH\ (COOCH_2Ph-)$), is made to coexist under the above-mentioned strong alkaline environment, it is probable that the dispersing agent will be hydrolyzed.

In contrast, in the present invention, it is sufficient to suitably dissolve these dispersing agents into the aqueous medium side which is a poor solvent, and it is not necessary to put the aqueous medium into a strong alkaline condition for dissolving a pigment. Therefore, use can be made of an alkali whose power is controlled to such strength that it can dissolve, for example, a benzyl methacrylate dispersing agent having an organic acid group by neutralizing the acid group. As a result, according to the production method of the present invention, alkaline hydrolysis and the like can be suppressed or prevented, so that it is possible to use a broad range of dispersing agents as necessary to meet application, production efficiency and other requirements.

Further, as a polymer compound that can be used as another (polymer) dispersing agent, use can be preferably made of natural polymer compounds, such as albumin, gelatin, rosin, shellac, starch, gum Arabic, and sodium alginate; and their modified compounds. Further, these dispersing agents may be used singly, or in a combination of two or more. A ratio of these dispersing agents to be used is not particularly limited, and it is preferred to use the dispersing agent in a proportion of 0.05 parts by mass or more with respect to 1 part by mass of the water-insoluble colorant, and 50 parts by mass or less with respect to 100 parts by mass of the aprotic organic solvent. When the proportion of the dispersing agent is too large with respect to the aprotic organic solvent, it is sometimes difficult to make the dispersing agent completely dissolve in the solvent. On the other hand, when the proportion of the dispersing agent is too small with respect to the water-insoluble colorant, it is sometimes difficult to achieve a sufficient dispersion effect.

In order to improve weather resistance when the dispersion of the present invention is used as an ink that is

described below, the above-described polymer compounds and/or dispersing agents can be preferably used. It is especially preferred to use a polymer dispersing agent or a polymer compound, each of which is soluble or dispersible in a particular organic solvent that is used for a cleaning treatment, in consideration of providing weather resistance and maintaining the dispersion at a low viscosity level even though the dispersion is concentrated.

When the above dispersing agent is contained in the solution into which the water-insoluble colorant is dissolved, in light of further improvement of a homogeneous dispersion property and a storage stability of water-insoluble colorant in a form of fine particles, the amount of the dispersing agent to be used is preferably within the range of 0.001 to 10 parts by mass, more preferably from 0.01 to 5 parts by mass, and particularly preferably from 0.1 to 2.5 parts by mass, with respect to 1 part by mass of the water-insoluble colorant. When the amount is too small, there may be a case wherein the dispersion stability of the water-insoluble colorant fine-particles is not improved. The amount of the dispersing agent to be contained in the dispersion of the present invention is not particularly limited, and as described above, the amount is preferably 0.05 or more parts by mass, more preferably 0.1 to 10 parts by mass, with respect to 1 part by mass of the water-insoluble colorant.

The embodiment wherein a solution of a water-insoluble colorant homogeneously dissolved therein and an aqueous solvent are mixed is not particularly limited. Examples include an embodiment in which a water-insoluble colorant solution is added to an aqueous medium under stirring, and an embodiment in which a water-insoluble colorant solution and an aqueous medium are each delivered to a certain length of flow path in the same longitudinal direction, and both the solution and the medium contact with each other in the course of getting through the flow path, thereby to deposit fine particles of the water-insoluble colorant (e.g. organic pigment). With respect to the former (the embodiment of mixing under stirring), it is especially preferred to use an embodiment in which a feed pipe or the like is introduced in an aqueous medium so that a water-insoluble colorant solution is fed from the pipe for addition in liquid. More specifically, the addition in liquid can be performed by using an apparatus described in International Publication WO2006/121018 pamphlet, paragraph Nos. 0036 to 0047. With respect to the latter (the embodiment of mixing both the liquid and the medium by using the flow path), use can be made, for example, of micro reactors, as described in JP-A-2005-307154, paragraph Nos. 0049 to 0052 and FIGS. 1 to 4, and in JP-A-2007-39643, paragraph Nos. 0044 to 0050.

A condition for deposition and formation of the particles of the water-insoluble colorant is not particularly limited, and can be selected from a range from a normal pressure condition to a subcritical or supercritical condition. The temperature at which the particles are prepared under normal pressure is preferably -30 to 100°C, more preferably -10 to 60°C, and particularly preferably 0 to 30°C. A mixing ratio of the water-insoluble colorant solution to the aqueous medium is preferably 1/50 to 2/3, more preferably 1/40 to 1/2, and particularly preferably 1/20 to 3/8 in volume ratio. The concentration of the particles of the water-insoluble colorant in the mixed liquid at the time of deposition of the particles is not particularly limited, but the amount of the particles of the water-insoluble colorant is preferably 10 to 40,000 mg, more preferably 20 to 30,000 mg, and particularly preferably 50 to 25,000 mg, per 1,000 ml of the solvent.

In the present invention, a gas, such as the air or oxygen, may coexist at the time of formation of particles. For example, the gas may be used as an oxidant. The embodiment of making the gas coexists is not particularly limited. For example, the gas may be dissolved in a liquid of the water-insoluble colorant and/or an aqueous medium in advance. Alternatively, the gas may be introduced into another medium different from these liquid and medium, and followed by contacting said another medium with these liquid and medium to introduce thereinto.

In the production method of the present invention, with respect to the alkali contained in the solution of the water-soluble colorant and the aqueous medium, either or both are preferably organic bases. Further, in one preferred embodiment of the production method of the present invention, the fine particles of the water-insoluble colorant are in the form of soft aggregates aggregated to a level that can be converted into a re-dispersion thereof, and after the soft aggregates have been separated from the dispersion, they are disaggregated into fine particles that are re-dispersed into a re-dispersion medium. In this manner, the re-dispersed medium preferably becomes an aqueous dispersion that contains water.

In this embodiment, it is preferable that a mixed liquid prepared by precipitating the fine particles of the water-insoluble colorant is subjected to an acid treatment so that the aggregate of the particles is formed. The acid-using treatment preferably includes steps of aggregation of the particles with an acid, separation of the resultant aggregate from a solvent (dispersing medium), concentration, solvent removal, and desalting (deacidification). By making a system acidic, it enables to reduce electrostatic repulsion of particles owing to a hydrophilic part of the acid group, and to aggregate the particles.

As the acid that is used in the aggregation of particles, any acid may be used so long as the compound is able to make hardly precipitating fine-particles in the aqueous dispersion aggregate in a form such as slurry, paste, powder-like, granular, cake-like (bulk), sheet-like, short (discontinuous) fiber-like or flake-like form, and able to efficiently separate the resultant aggregate from a solvent according to an ordinary separation method. As the acid, it is preferred to use an acid that forms a water-soluble salt with alkali. It is more preferable that the acid itself has a high solubility to water. In order to conduct desalting as efficiently as possible, it is preferable that the amount of acid to be used is as small as possible so long as the particles aggregate in the added amount of the acid. Examples of the acid include hydrochloric

acid, sulfuric acid, nitric acid, acetic acid, phosphoric acid, trifluoroacetic acid, dichloroacetic acid, and methanesulfonic acid. Of these acids, hydrochloric acid, acetic acid, and sulfuric acid are particularly preferable. An aqueous dispersion of colorant particles that has been treated with the acid so as to be readily separable can be easily separated by using a centrifugal separator, a filter, a slurry liquid-solid separator or the like. At this time, a degree of desalting or solvent removal can be controlled by adding diluent water, or by increasing frequency of decantation and washing. Regarding the aggregation method, inorganic compounds such as alum or so and polymer aggregation agents may be used in combination.

The thus-obtained aggregate can be used as a paste or slurry as it is, each of which has high water content. If necessary, it is also possible to use fine powder that is obtained by drying the paste or slurry according to a drying method, such as a spray-dry method, a centrifugal separation drying method, a filter drying method, or a freeze-drying method.

In the production method of the present invention, it is preferred to re-disperse the flocculation (soft aggregate), in order to obtain a dispersion of fine particles. As the re-dispersion treatment, there can be exemplified an alkali treatment. Namely, it is preferred to neutralize the particles aggregated with using the acid, with alkali, and then to re-disperse the particles into water or the like while maintaining a primary particle diameter at the time of deposition of the particles. Since desalting and solvent removal have been already conducted, a concentrated-base of aqueous dispersion containing a little impurity can be obtained. As the alkali to be used herein, any alkali can be used, so long as they act as a neutralizing agent for a dispersing agent having an acidic hydrophilic part and enhance solubility to water. Specific examples of the alkali include various kinds of organic amines, such as aminomethylpropanol, dimethylaminopropanol, dimethylethanolamine, ditehyltriamine, monoethanolamine, diethanolamine, triethanolamine, butyldiethanolamine, and morpholine; alkali metal hydroxides, such as sodium hydroxide, lithium hydroxide, and potassium hydroxide; quaternary ammonium hydroxides, such as tetramethylammonium hydroxide, benzyltrimethylammonium hydroxide, and tetrabutylammonium hydroxide; and ammonia. Among these, it is preferable to use sodium hydroxide, potassium hydroxide, and quaternary ammonium hydroxide as the alkali to be used in the re-dispersion step. Additionally, only one kind of alkali may be used, or, alternatively, two or more kinds of alkalis may be used in combination.

The amount of the alkali to be used is not particularly limited, but is within the range in which the aggregated particles can be re-dispersed stably in water. When the dispersion is used for end use such as a printing ink or inkjet printer ink, the alkali sometimes causes corrosion of various kinds of parts. Therefore, it is preferred to use the alkali in such an amount that pH is within the range of 6 to 12, and more preferably from 7 to 11.

Further, in accordance with the dispersing agent that is used in the time of deposition of particles, a method different from the above alkali treatment may be used. Examples of the method include a re-dispersion treatment using a low molecular dispersing agent or polymer dispersing agent, as described above. At this time, means for a dispersion treatment that are known hitherto may be used. For example, it is possible to use a dispersing machine, such as sand mill, bead mill, ball mill, and Dissolver, or an ultrasonic treatment. These re-dispersion treatments may be used in combination with the above alkali treatment.

When the aggregated particles are re-dispersed, re-dispersion can be easily performed by adding a water-soluble organic solvent as a medium for the re-dispersion. The organic solvent used is not particularly limited. Specific examples of the organic solvent include lower alcohols, such as methanol, ethanol, n-propanol, isopropanol, n-butanol, isobutanol, and tert-butanol; aliphatic ketones, such as acetone, methyl ethyl ketone, methyl isobutyl ketone, and diacetone alcohol; ethylene glycol, diethylene glycol, triethylene glycol, glycerol, propylene glycol, ethylene glycol monomethyl or monoethyl ether, propylene glycol monomethyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, N,N-dimethylformamide, dimethylimidazolidinone, dimethylsulfoxide, and N,N-dimethylacetoamide. These solvents may be used singly or in a combination of two or more compounds. When the fine particles of the water-insoluble colorant are re-dispersed to prepare an aqueous dispersion thereof, the water content is preferably in the range of 99 to 20% by mass, and more preferably from 95 to 30% by mass, of the aqueous dispersion, respectively. The content of the water-soluble organic solvent is preferably in the range of 50 to 0.1% by mass, and more preferably from 30 to 0.05% by mass, of the aqueous dispersion, respectively.

When water, the above-described alkali and water-soluble organic solvent are added to the aggregated particles, if necessary, a stirrer, a mixer, a dispersing machine (such as a sand mill, a beads mill, a ball mill, a dissolver), or a ultrasonic dispersing machine may be used. When a paste or slurry of a water-insoluble colorant which is high in water content is used, addition of water is unnecessary. Further, heating, cooling, distillation or the like may be conducted, for the purpose of enhancing efficiency of re-dispersion and another purpose of removing unnecessary water-soluble organic solvent, or an excessive alkali or the like.

The thus-obtained dispersion by the above method may be possibly a dispersion having a lower viscosity than those subjected to ultrafiltration or concentration.

In the preparation of the dispersion of the present invention, it is preferable to introduce a heating step. Regarding

the significance of introducing the heating step, there are the effects described in Japanese Patent No. 3936558 and being representative by so-called Ostwald ripening.

The organic pigment usable as the water-insoluble colorants in the dispersion prepared according to the method of the present invention is not limited in hue and structure thereof. Specifically, examples thereof include perylene-compound pigments, perynone-compound pigments, quinacridone-compound pigments, quinacridonequinone-compound pigments, anthraquinone-compound pigments, anthanthorone-compound pigments, benzimidazolone-compound pigments, condensed disazo-compound pigments, disazo-compound pigments, azo-compound pigments, indanthrone-compound pigments, indanthrene-compound pigments, quinophthalone-compound pigments, quinoxalinedione-compound pigments, metal-complex azo-compound pigments, phthalocyanine-compound pigments, triarylcarbonium-compound pigments, dioxazine-compound pigments, aminoanthraquinone-compound pigments, diketopyrrolopyrrole-compound pigments, naphthol AS compound pigments, thioindigo-compound pigments, isoindoline-compound pigments, isoindolinone-compound pigments, pyranthrone-compound pigments, isoviolanthrone-compound pigments, and mixtures of any two or more thereof.

More specifically, examples of the organic pigment include perylene-compound pigments, such as C.I. Pigment Red 179, C.I. Pigment Red 190, C.I. Pigment Red 224, C.I. Pigment Violet 29, or the like; perynone-compound pigments, such as C.I. Pigment Orange 43, C.I. Pigment Red 194 or the like; quinacridone-compound pigments, such as C.I. Pigment Violet 19, C.I. Pigment Violet 42, C.I. Pigment Red 122, C.I. Pigment Red 192, C.I. Pigment Red 202, C.I. Pigment Red 207, C.I. Pigment Red 209 or the like; quinacridonequinone- compound pigments, such as C.I. Pigment Red 206, C.I. Pigment Orange 48, C.I. Pigment Orange 49, or the like; anthraquinone-compound pigments, such as C.I. Pigment Yellow 147 or the like; anthanthrone-compound pigments, such as C.I. Pigment Red 168 or the like; benzimidazolone-compound pigments, such as C.I. Pigment Brown 25, C.I. Pigment Violet 32, C.I. Pigment Yellow 120, C.I. Pigment Yellow 180, C.I. Pigment Yellow 181, C.I. Pigment Orange 36, C.I. Pigment Orange 62, C.I. Pigment Red 185, or the like; condensed disazo-compound pigments, such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144 (C.I. Number: 20735), C.I. Pigment Red 166, C.I. Pigment Yellow 219, C.I. Pigment Red 220, C.I. Pigment Red 221, C.I. Pigment Red 242, C.I. Pigment Red 248, C.I. Pigment Red 262, C.I. Pigment Brown 23, or the like; disazo-compound pigments, such as C.I. Pigment Yellow 13, C.I. Pigment Yellow 83, C.I. Pigment Yellow 155, C.I. Pigment Yellow 188, or the like; azo-compound pigments, such as C.I. Pigment Red 187, C.I. Pigment Red 170, C.I. Pigment Yellow 74, C.I. Pigment Red 48, C.I. Pigment Red 53, C.I. Pigment Orange 64, C.I. Pigment Red 247, or the like; indanthrone (indanthrene) -compound pigments, such as C.I. Pigment Blue 60, or the like; quinophthalone-compound pigments, such as C.I. Pigment Yellow 138, or the like; quinoxalinedione-compound pigments, such as C.I. Pigment Yellow 213, or the like; metal-complex azo-compound pigments, such as C.I. Pigment Yellow 129, C.I. Pigment Yellow 150, or the like; phthalocyanine-compound pigments, such as C.I. Pigment Green 7, C.I. Pigment Green 36, C.I. Pigment Green 37, C.I. Pigment Blue 16, C.I. Pigment Blue 75, C.I. Pigment Blue 15 (including 15:1, 15:6 or the like), or the like; triaryl carbonium-compound pigments, such as C.I. Pigment Blue 56, C.I. Pigment Blue 61, or the like; dioxazine-compound pigments, such as C.I. Pigment Violet 23, C.I. Pigment Violet 37, or the like; aminoanthraquinone-compound pigments, such as C.I. Pigment Red 177, or the like; diketopyrrolopyrrole-compound pigments, such as C.I. Pigment Red 254, C.I. Pigment Red 255, C.I. Pigment Red 264, C.I. Pigment Red 272, C.I. Pigment Orange 71, C.I. Pigment Orange 73, or the like; naphthol AS compound pigments, such as C.I. Pigment Red 187, C.I. Pigment Red 170, or the like; thioindigo-compound pigments, such as C.I. Pigment Red 88, or the like; isoindoline-compound pigments, such as C.I. Pigment Yellow 139, C.I. Pigment Orange 66, or the like; isoindolinone-compound pigments, such as C.I. Pigment Yellow 109, C.I. Pigment Yellow 110, C.I. Pigment Orange 61, or the like; pyranthrone-compound pigments, such as C.I. Pigment Orange 40, C.I. Pigment Red 216, or the like; or isoviolanthrone-compound pigments, such as C.I. Pigment Violet 31, or the like.

In particular, the water-insoluble colorant is preferably selected from quinacridone-compound pigments, diketopyrrolopyrrole-compound pigments, monoazo yellow organic pigments, condensed azo organic pigments, quinophthalone-compound pigments, benzimidazolone-compound pigments or disazo yellow pigments; more preferably quinacridone-compound pigments, diketopyrrolopyrrole-compound pigments, or azo yellow organic pigments; and particularly preferably azo yellow organic pigments.

The content of the water-insoluble colorant in the dispersion according to the present invention is not particularly limited, but preferably, for example, 0.01 to 30 mass%, more preferably 1.0 to 20 mass%, and particularly preferably 1.1 to 15 mass%, when application as ink is considered.

The dispersion in the present invention reveals small changes in its color tone, and is kept less viscous, even when it is highly concentrated. In the case where the dispersion is used for a recording liquid, for example, it can be favorably used within the above range, since the above embodiment expands degrees of freedom in the kinds and addition amounts of the additives usable for the recording liquid.

Only one kind of water-insoluble colorant may be contained in the dispersion of the present invention, or, alternatively, two or more kinds of water-insoluble colorants in combination may be contained in the dispersion. The

combination of two or more kinds of water-insoluble colorants is not particularly limited. It is preferred to combine the same type of pigment compounds, such as a combination of azo-series compound pigments, or a combination of diketopyrrolopyrrole-series compound pigments. In other words, it is preferred to use a combination of organic pigments having similar skeletons to each other. Specifically, there are preferable combinations, such as C.I. Pigment Violet 19 and C.I. Pigment Red 122; C.I. Pigment Violet 19 and C.I. Pigment Red 122 and C.I. Pigment Red 209; C.I. Pigment Yellow 128 and C.I. Pigment Yellow 74; and C.I. Pigment Yellow 128 and C.I. Pigment Orange 13. Further, when containing at least two organic pigments as components in the dispersion, the dispersion preferably contains at least two organic pigments whose maximum absorption wavelengths (λmax) differ from each other by within the range of 10 nm to 200 nm, and the dispersion particularly preferably contains at least two organic pigments whose maximum absorption wavelengths (λmax) differ from each other by within the range of 10 nm to 100 nm. It should be noted that the absorption wavelength of a pigment as termed with respect to the present invention means the absorption wavelength in the particle state (i.e. the colorant, e.g. a pigment, is formed into particles), namely in the state of particles coated on or incorporated in a medium, and it does not mean an absorption wavelength in the solution state where the pigment is dissolved in a specific medium such as alkali or acid.

The maximum absorption wavelength (λmax) of a primary organic pigment component is not particularly limited. It is practical in a coloring application to use organic pigment compounds having the maximum absorption wavelength within the visible light region. For example, it is preferred to use an organic pigment compound having the maximum absorption wavelength in the range of 300 nm to 750 nm.

[Average particle diameter from observation by electron microscope]

In the present invention, a form of the water-insoluble colorant fine-particles that are contained in the dispersion is observed by using a transmission electron microscope (TEM), to calculate an average particle diameter thereof, as described below.

In one embodiment of the present invention, an average particle diameter of the water-insoluble colorant particle is preferably from 5 nm to 60 nm. Especially, the average particle diameter of the water-insoluble colorant that is calculated from observation by using transmission electron microscope (TEM) is preferably from 5 nm to 50 nm, and more preferably from nm to 45 nm. It is especially preferable that the average particle diameter is from 5 nm to 40 nm from a viewpoint of transparency of the dispersion and compatibility of dispersion stability in and resistance to light of the resultant dispersion. When the average particle diameter is too small, it is sometimes difficult to keep a stable dispersion state in the dispersion for a long time, or it is sometimes difficult to obtain excellent resistance to light. On the other hand, when the average particle diameter is too large, it is sometimes difficult to obtain good transparency of the dispersion. In the present invention, the fine particles of the water-insoluble colorant may contain two or more kinds of pigments, and they may consist of only the water-insoluble colorant(s), or may contain other compound than the water-insoluble colorant. At this time, it is preferable that the particles of the water-insoluble colorant are composed of a solid solution of two or more kinds of pigments. It should be noted that a mixture of a portion having a crystalline structure and another portion having a non-crystalline structure may be present in the individual particle.

In the present invention, a term "fine particles of the water-insoluble colorant" means not only fine particles consisting only of water-insoluble colorant(s) but also fine particles comprising water-insoluble colorant(s) and other component(s). For example, the water-insoluble colorant and/or other compound(s) may constitute the particle cores, and the dispersing agent (polymer compound, surfactant, etc.) may adhere so as to cover the cores to form fine particles. In the dispersion of the present invention, specifically, it is preferable for the fine particles of the water-insoluble colorant to be covered and adhered by the above specific polymer compound having the acid group. The state of covering and adhering can be ascertained by, for example, the nuclear magnetic resonance method using solid samples, thermal analysis such as differential thermogravimetric analysis, or other such method.

The water-insoluble colorant that is used in the present invention may be contained in resin fine-particles or inorganic fine-particles. In this case, it is preferable that the resin fine-particles and inorganic fine-particles are a non-colored component in order not to degrade a tint of the water-insoluble colorant. An average particle diameter of the resin fine-particles or the inorganic fine-particles is preferably from 6 nm to 200 nm. When the dispersion of the water-insoluble colorant is used as an inkjet recording liquid, the average particle diameter is more preferably from 6 nm to 150 nm, and especially preferably from 6 nm to 100 nm, from a viewpoint of obtaining favorable discharge (emission) stability.

[Average particle diameter according to a dynamic light-scattering method]

In the present invention, a dispersion state of the water-insoluble colorant may be also evaluated according to a dynamic light-scattering method. Thereby, an average particle diameter of the water-insoluble colorant can be calculated. The principle of evaluation is detailed below. Particles with the size in the range from about 1 nm to about 5 μm

are momentarily changing their position and direction in Brownian motion such as translation and rotation. Thus, by irradiating a laser light to these particles and then detecting the resultant scattered light, fluctuation of the scattered light intensity depending on Brownian motion is observed. By observing the fluctuation of the scattered light intensity with respect to time period, a speed (diffusion coefficient) of the particles in Brownian motion is calculated, to know the size of the particles.

Applying the above principle, an average particle diameter of the water-insoluble colorant is measured. When the measured value is similar to the average particle diameter that is obtained from the electron microscope observation, in particular TEM observation, it means that the particles in a liquid are in mono dispersion (the situation in which particles are neither bonding nor aggregating to each other). Namely, particles are each dispersed in a dispersion medium with keeping an interval between particles, so that they can move singly and independently.

It should be noted that even though the water-insoluble colorant in a dispersion medium is completely in a monodispersion, error of measurement or the like sometimes causes a difference between the average particle diameter according to the dynamic light-scattering method and the average particle diameter from TEM observation. For example, it is necessary that a concentration of a liquid to be measured is suitable for both the performance of the measurement apparatus and the method of detecting scattered light. Accordingly, error occurs unless a liquid to be measured has a concentration enough to secure a sufficient amount of transmission of light. Further, when nano-sized particles are measured, the thus-obtained signal intensities are so feeble that they are strongly affected by dust, which causes errors. Therefore, it is necessary to take care of pre-treatment of the sample and purity of environment for measurement. When nano-sized particles are measured, a laser light source having a transmission output of 100 mW or more is suitable for enhancing intensities of scattered light.

Further, it is preferable that a particle diameter distribution of the water-insoluble colorant dispersed in a dispersion medium in the present invention is monodispersion. Monodisperse particles are advantageous because adverse influence owing to light-scatting at large-sized particles can be reduced. For example, when aggregate is formed by using the dispersion at printing, recording, or the like, the mono dispersion has advantages to control of a filling form of the formed aggregate or the like. As an indicator that can be utilized to evaluate dispersity of the dispersion, for example, use can be made of a difference between the diameter (D90) of particles that occupy 90% by number and the diameter (D10) of particles that occupy 10% by number of the total particle numbers, in the following integral equation of the particle diameter distribution function, with respect to the arithmetic average particle diameter that is obtained according to the dynamic light-scattering method:

$$dG = f(D) \times d(D)$$

wherein G represents the number of particles, and D represents a primary particle diameter.

In the present invention, the above difference between the size (D90) and the size (D10) is preferably 45 nm or less, and more preferably from 1 nm to 3 0 nm, and especially preferably from 1 nm to 20 nm. It should be noted that the above method can be suitably used in the particle diameter distribution curve that is prepared by using the particle diameter that is obtained from the above-described observation with electron microscope.

Further, as another example of the indicator to evaluate dispersity, use can be also made of a ratio of a volume average particle diameter (Mv) to a number average particle diameter (Mn), namely a ratio of (Mv)/(Mn). Both Mv and Mn are obtained by the dynamic light-scattering method. In the dispersion of the present invention, the aforementioned ratio (Mv)/(Mn) is preferably 1.5 or less, more preferably 1.4 or less, and still more preferably 1.3 or less.

In the dispersion of the present invention, particles that contain the water-insoluble colorant are dispersed in a medium containing water. In one embodiment, when a peak intensity of light absorbance of the dispersion in the visible light wavelength region (for example, about 380 nm to about 700 nm) is set to be 1, the light-scattering intensity is preferably 30,000 cps or less. When the light-scattering intensity is low, high transparency can be recognized with the naked eye in the above dispersion, or a recording liquid in which the dispersion is used. In the conventional pigment ink, when a peak intensity of light absorbance in the visible light wavelength region is set to be 1, the light-scattering intensity is in the range of about 150,000 cps to about 250,000 cps, for example, in the case where an average particle diameter of the colorant particle in the ink is about 150 nm. By a comparison with the aforementioned conventional ink, one can appreciate the high transparency with the naked eye by of the dispersion whose light-scattering intensity is suppressed up to 30,000 cps.

The recording liquid of the present invention may be prepared by using the above dispersion of the present invention, for example, by mixing the dispersion with each of components such as a specific polymer compound, a surfactant and an aqueous solvent, and then uniformly dissolving or dispersing them. It is preferable that the recording liquid of the present invention contains the above water-insoluble colorant in an amount of 0.1% by mass to 15% by

mass of the recording liquid. When an excessive amount of polymer compounds or other additives are contained in the prepared recording liquid (ink), these materials may be properly removed according to a method such as centrifugal separation and dialysis, thereby to re-prepare the ink composition. The recording liquid of the present invention may be used alone. Alternatively, the recording liquid may be combined with another ink, to prepare an ink set of the present invention.

The recording liquid of the present invention may be used in various image-forming methods and apparatuses, such as a variety of printing methods, inkjet method, and electrophotography. Imaging can be performed according to an image-forming method using the apparatuses. Further, according to the inkjet method, fine patterns may be formed, or dosage of drugs may be conducted.

It is preferable that the recording liquid of the present invention is used as an inkjet recording liquid, and it is also preferred to prepare an ink set using the inkjet recording liquid. Further, it is preferred to prepare a printed article having an image recorded by use of the recording liquid or ink set of the present invention, with a means that can provide the recording liquid to a recording medium. In this connection, it is preferred to prepare a printed article having an image with a shading nuance adjusted by the means that has a function to adjust an applying amount or concentration of the recording liquid. Further, it is preferable that the recording liquid or ink set of the present invention is utilized in an image-forming method that includes the step of:

> providing the recording liquid with a medium, thereby to record an image. Furthermore, according to the present invention, it is also possible to provide an image-forming apparatus having a means for recording an image by using the above recording liquid or ink set and providing the recording liquid with a medium.

When the dispersion of the present invention having the aforementioned excellent performances is made into an ink, the resultant ink can realize recording of an image high in density and high in accuracy, which is comparable with the current offset printing or relief printing which expresses, for example, tone and shade of color by area ratio (area gradation).

The present invention is contemplated for providing a dispersion of high concentration prepared by dispersing a water-insoluble colorant, such as a pigment, as fine particles of nanometer size having fine and uniform particle diameter; and for providing an efficient method of producing the dispersion. Further, the present invention is contemplated for improving a co-dissolving property of the water-insoluble colorant, such as a pigment, with a polymer compound to be coexisted with the colorant; and for realizing dispersion stabilization of the dispersion prepared by using the solution thereof. The present invention is further contemplated for providing a dispersion which shows improved storage stability, discharging property, transparency and glossiness when formed into an ink; and for providing a method of producing the dispersion. Still further, the present invention is contemplated for providing a recording liquid, an ink set, a printed article, a method of forming an image, and an image forming apparatus, using the same.

According to the production method of the present invention, it becomes possible to reduce the amount of the poor solvent in the course of generating (by precipitation of) particles of nanometer sizes, so that the dispersion of high concentration can be obtained. Further, when the dispersion is aggregated and re-dispersed, the present invention achieves the excellent effects of being capable of obtaining a dispersion with a low viscosity despite its high concentration. Also, the dispersion of a water-insoluble colorant obtained by the production method of the present invention, contains fine particles of the water-insoluble colorant which are made fine down to nanometer sizes, and maintains its favorable dispersion stability. Furthermore, the recording liquid, the ink set, and the printed article prepared from the dispersion of the present invention have very high transparency, and are excellent in discharging property and in color fastness to light. Thus, the present invention can provide a recording liquid, an image-forming method, and an image-forming apparatus achieving a high accuracy in forming an image and a high quality of the resultant image.

The present invention will be described in more detail based on the following examples, but the invention is not intended to be limited thereto. In the following examples, the terms "part(s)" and "%" are values by mass, unless otherwise specified.

## EXAMPLES

[Measurement of average particle diameter of fine particles in accordance with dynamic light-scattering method]

The average particle diameter of each of the dispersions according to the dynamic scattering method was measured by using LB-500 (trade name, manufactured by HORIBA, Ltd.) after dilution with ion-exchanged water. At this time, inputting 1.600 as the refractive index of pigment, and also inputting 1.333 as the refractive index of ion-exchange water as the dispersion medium, a volume-average particle diameter Mv of each of the dispersions, and a number-average particle diameter Mn thereof were measured.

[Measurement of average particle diameter of fine particles with transmission electron microscope (TEM)]

Further, evaluation of the average particle diameter from observation with transmission electron microscope (TEM) was conducted by adding dropwise a diluted dispersion onto a Cu 200 mesh to which a carbon film was attached, drying, measuring the major axis of each of 300 particles that were isolated and not piled up each other, from an image of the particles photographed to 100,000 times using TEM (1200EX, trade name, manufactured by JEOL Ltd.), an then calculating an average value as an average particle diameter. Hereinafter, the average particle diameter calculated from TEM observation is referred to as a TEM average particle diameter.

(Synthesis of polymer compound)

Polymer compound 1

Dimethylsulfoxide 75 g was placed into a 500-ml three-neck flask, under a nitrogen gas flow, the flask was heated at an inner temperature of 80°C, thereto was added dropwise over 2 hours a mixed solution of 70 g (0.67 mol) of styrene, 30 g (0.35 mol) of methacrylic acid (MAA), 1.77 g (7.67 mmol) of V-601 (trade name, manufactured by Wako Pure Chemical Industries) (dimethyl 2,2'-azobis(2-methylpropionate)), and 150 g of dimethylsulfoxide. After the completion of the dropwise addition, the resultant mixture was stirred under heating at 80°C for 2 hours, and 2 g of dimethylsulfoxide solution of 0.88 g (3.8 mmol) of V-601 (dimethyl 2,2'-azobis(2-methylpropionate)) was added to the flask, followed by stirring at 90°C for 1 hour. To the resultant mixture, 148 g of dimethylsulfoxide was added, followed by cooling by standing, thereby to obtain a dimethylsulfoxide solution of styrene/methacrylic acid copolymer (acid value: 200; molecular mass: 33,000). Polymer compound 2

Dimethylsulfoxide 75 g was placed into a 500-ml three-neck flask, under a nitrogen gas flow, the flask was heated at an inner temperature of 80°C, thereto was added dropwise over 2 hours a mixed solution of 80 g (0.77 mol) of styrene, 20 g (0.097 mol) of 2-acrylamido-2-methyl-1-propanesulfonic acid, 3.54 g (15.4 mmol) of V-601 (dimethyl 2,2'-azobis(2-methylpropionate)), and 150 g of dimethylsulfoxide. After the completion of the dropwise addition, the resultant mixture was stirred under heating at 80°C for 2 hours, and 2 g of dimethylsulfoxide solution of 0.88 g (3.8 mmol) of V-601 (dimethyl 2,2'-azobis(2-methylpropionate)) was added to the flask, followed by stirring at 90°C for 1 hour. To the resultant mixture, 148 g of dimethylsulfoxide was added, followed by cooling by standing, thereby to obtain a dimethylsulfoxide solution of styrene/2-acrylamido-2-methyl-1-propanesulfonic acid copolymer (acid value: 54; molecular mass: 16,000).

Polymer compound 3

Dimethylsulfoxide 75 g was placed into a 500-ml three-neck flask, under a nitrogen gas flow, the flask was heated at an inner temperature of 80°C, thereto was added dropwise over 2 hours a mixed solution of 70 g (0.67 mol) of styrene, 30 g (0.14 mol) of 2-methacryloxyethylphosphonic acid, 3.54 g (15.4 mmol) of V-601 (dimethyl 2,2'-azobis (2-methylpropionate)), and 150 g of dimethylsulfoxide. After the completion of the dropwise addition, the resultant mixture was stirred under heating at 80°C for 2 hours, and 2 g of dimethylsulfoxide solution of 0.88 g (3.8 mmol) of V-601 (dimethyl 2,2'-azobis(2-methylpropionate)) was added to the flask, followed by stirring at 90°C for 1 hour. To the resultant mixture, 148 g of dimethylsulfoxide was added, followed by cooling by standing, thereby to obtain a dimethylsulfoxide solution of styrene/2-methacryloxyethylphosphonic acid copolymer (acid value: 80; molecular mass: 13,000).

Polymer compound 4

Dimethylsulfoxide 75 g was placed into a 500-ml three-neck flask, under a nitrogen gas flow, the flask was heated at an inner temperature of 80°C, thereto was added dropwise over 2 hours a mixed solution of 70 g (0.40 mol) of benzyl methacrylate, 30 g (0.35 mol) of methacrylic acid (MAA), 1.83 g (7.95 mmol) of V-601 (dimethyl 2,2'-azobis(2-methylpropionate)), and 75 g of dimethylsulfoxide. After the completion of the dropwise addition, the resultant mixture was stirred under heating at 80°C for 2 hours, and 1 g of dimethylsulfoxide solution of 0.45 g (1.95 mmol) of V-601 (dimethyl 2,2'-azobis(2-methylpropionate)) was added to the flask, followed by stirring at 90°C for I hour. To the resultant mixture, 149 g of dimethylsulfoxide was added, followed by cooling by standing, thereby to obtain a dimethylsulfoxide solution of benzyl methacrylate/methacrylic acid copolymer (acid value: 200; molecular mass: 37,000).

(Example 1)

Into a 10-ml vial bottle, 0.1 g of C. I. Pigment Yellow 74 (abbreviated as PY74 below) was placed, and thereto 2.6 g of dimethylsulfoxide and 0.26 g of benzyltrimethylammonium hydroxide (abbreviated as $BnMe_3NOH$ in the below,

40% methanol solution, manufactured by Tokyo Chemical Industry Co., Ltd.) as an alkali were added, followed by stirring the resultant mixture under heating to 40°C, to dissolve the pigment completely (which is referred to as a pigment solution sample). The color of the resultant solution was dark red. Into a 100 ml vial bottle, 0.4 g of the Polymer compound 1 (25% by mass dimethylsulfoxide solution), 0.24 g of $BnMe_3NOH$ as an alkali, and 30 g of ion-exchange water were placed, and after stirring the resultant mixture with a stirrer for 1 hour, it was confirmed that there were no insoluble matters. While stirring the resultant alkali aqueous solution containing the Polymer compound 1, the foregoing pigment alkali solution of PY74 (the aforementioned pigment solution sample), which had been sucked up using a 5-ml Terumo Syringe (trade name) and a Terumo Needle (trade name, aperture: 0.80 mm and length: 38 mm) (both the syringe and needle were manufactured by Terumo Corporation), was discharged at a stretch, to give Dispersion 1. The resultant Dispersion 1 was extremely high in transparency by observation with the naked eye.

(Examples 2 to 18)

Dispersions 2 and 3 were obtained in the same manner as in Example 1, except that the amount of the ion-exchange water 30 g was changed to 13.3 g and 6.7 g, respectively (Examples 2 and 3). Separately, Dispersions 4 to 6 were obtained in the same manner as Example 1, except that the amount of Polymer compound 1 (25% by mass dimethylsulfoxide solution) 0.4 g was changed to 0.2 g, and that the amount of ion-exchange water was changed to 30 g, 13.3 g, and 6.7 g, respectively (Examples 4 to 6). Separately, Dispersions 7 to 9 were obtained in the same manner as in Example 1, except that the amount of Polymer compound 1 (25% by mass dimethylsulfoxide solution) 0.4 g was changed to 0.2 g, that 0.24 g of $BnMe_3NOH$ as an alkali was changed to 0.36 g of 1 mol% aqueous sodium hydroxide solution, and that the amount of ion-exchange water was changed to 30 g, 13.3 g and 6.7 g, respectively (Examples 7 to 9). Separately, Dispersions 10 to 12 of pigment were obtained in the same manner as in Example 1, except that the pigment PY74 was changed to C. I. Pigment Yellow 128 (abbreviated to as PY128 below), and that the amount of the ion-exchange water was changed to 30 g, 13.3 g and 6.7 g, respectively (Examples 10 to 12). Separately, Dispersions 13 to 15 were obtained in the same manner as in Example 1, except that the pigment PY74 was replaced to C. I. Pigment Red 122 (abbreviated to as PR122 below), and that the amount of the ion-exchange water was changed to 30 g, 13.3 g, and 6.7 g, respectively (Examples 13 to 15). Separately, Dispersions 16 to 18 were obtained in the same manner as in Example 1, except that Polymer compound 1 was changed to Polymer compounds 2, 3, and 4, respectively, and that the amount of ion-exchange water 30 g was changed to 6.7 g (Examples 16 to 18).

(Comparative example 1)

Placing 0.1 g of PY74 into a 10-ml vial bottle, and further adding 2.6 g of dimethylsulfoxide, 0.38 g of $BnMe_3NOH$ (40% methanol solution) as an alkali, and 0.4 g of the Polymer compound 1 (25% by mass dimethylsulfoxide solution), the resultant mixture was stirred under heating up to 40 °C, to dissolve the pigment completely. The color of the resultant solution was dark red. Placing 30 g of ion-exchange water into a 100-ml vial bottle, and while stirring the water with a stirrer, the pigment alkali solution of PY74 was sucked up using a 5-ml Terumo Syringe (trade name) and a Terumo Needle (trade name, aperture: 0.80 mm × length: 38 mm), followed by discharging the sucked-up solution into the stirred water at a stretch, to obtain Dispersion c1.

(Comparative examples 2 to 4)

Dispersions c2 and c3 were obtained in the same manner as in Comparative example 1, except that the amount of the ion-exchange water was changed to 13.3 g and 6.7 g, respectively (Comparative examples 2 and 3). Separately, Dispersion 21 was obtained in the same manner as in Comparative example 1, except that Polymer compound 1 was changed to Polymer compound 4 (Comparative example 4).

Table 1

| | Pigment | Dispersant | Dispersant equivalent* | Base | Concentration (mass%) | DLS particle diameter Mv*** (nm) | Index of particle diameter** |
|---|---|---|---|---|---|---|---|
| Comparative example 1 | PY74 | Polymer compound 1 | 100 | $BnMe_3NOH$ | 0.3 | 40 | 100 |

(continued)

| | Pigment | Dispersant | Dispersant equivalent* | Base | Concentration (mass%) | DLS particle diameter Mv*** (nm) | Index of particle diameter** |
|---|---|---|---|---|---|---|---|
| Comparative example 2 | PY74 | Polymer compound 1 | 100 | $BnMe_3NOH$ | 0.6 | 38 | 95 |
| Comparative example 3 | PY74 | Polymer compound 1 | 100 | $BnMe_3NOH$ | 1.0 | 36 | 90 |
| Comparative example 4 | PY74 | Polymer compound 4 | 100 | $BnMe_3NOH$ | 1.0 | 78 | - |
| Example 1 | PY74 | Polymer compound 1 | 100 | $BnMe_3NOH$ | 0.3 | 49 | 100 |
| Example 2 | PY74 | Polymer compound 1 | 100 | $BnMe_3NOH$ | 0.6 | 42 | 86 |
| Example 3 | PY74 | Polymer compound 1 | 100 | $BnMe_3NOH$ | 1.0 | 33 | 70 |
| Example 4 | PY74 | Polymer compound 1 | 50 | $BnMe_3NOH$ | 0.3 | 67 | 100 |
| Example 5 | PY74 | Polymer compound 1 | 50 | $BnMe_3NOH$ | 0.6 | 50 | 75 |
| Example 6 | PY74 | Polymer compound 1 | 50 | $BnMe_3NOH$ | 1.0 | 41 | 61 |
| Example 7 | PY74 | Polymer compound 1 | 50 | NaOH | 0.3 | 79 | 100 |
| Example 8 | PY74 | Polymer compound 1 | 50 | NaOH | 0.6 | 31 | 39 |
| Example 9 | PY74 | Polymer compound 1 | 50 | NaOH | 1.0 | 30 | 38 |
| Example 10 | PY128 | Polymer compound 1 | 100 | $BnMe_3NOH$ | 0.3 | 219 | 100 |
| Example 11 | PY128 | Polymer compound 1 | 100 | $BnMe_3NOH$ | 0.6 | 105 | 48 |

(continued)

| | Pigment | Dispersant | Dispersant equivalent* | Base | Concentration (mass%) | DLS particle diameter Mv*** (nm) | Index of particle diameter** |
|---|---|---|---|---|---|---|---|
| Example 12 | PY128 | Polymer compound 1 | 100 | $BnMe_3NOH$ | 1.0 | 76 | 35 |
| Example 13 | PR122 | Polymer compound 1 | 100 | $BnMe_3NOH$ | 0.3 | 418 | 100 |
| Example 14 | PR122 | Polymer compound 1 | 100 | $BnMe_3NOH$ | 0.6 | 229 | 55 |
| Example 15 | PR122 | Polymer compound 1 | 100 | $BnMe_3NOH$ | 1.0 | 224 | 54 |
| Example 16 | PY74 | Polymer compound 2 | 100 | $BnMe_3NOH$ | 1.0 | 51 | - |
| Example 17 | PY74 | Polymer compound 3 | 100 | $BnMe_3NOH$ | 1.0 | 62 | - |
| Example 18 | PY74 | Polymer compound 4 | 100 | $BnMe_3NOH$ | 1.0 | 42 | - |

Note:
* The amount in parts by mass of the polymer compound (dispersant) with respect to 100 parts by mass of the pigment.
** Index of particle diameter due to density change: Index $\{(D_2/D_1)\times 100\}$ of particle diameters, in which the particle diameter ($D_1$) of pigment fine-particles in a dispersion liquid with pigment concentration 0.3% by mass is taken as 100 and the particle diameter ($D_2$) of the pigment fine-particles is one in a higher concentration dispersion liquid (0.6% by mass or 1.0% by mass).
*** The volume average particle diameter (Mv) measured with dynamic light-scattering.

It is apparent from the results that the pigment fine-particles of the dispersions prepared according to the production method of the present invention were very small and uniform. Further, it is apparent from the results that, in comparison with the comparative examples, in the examples according to the present invention, the lesser the amount of the poor solvent is, the smaller the particle diameter is, and this indicates that the method of the present invention can provide pigment fine-particle dispersions of a high concentration, with a favorable efficiency.

(Example 19)

C. I. Pigment Red 122 in an amount of 6.0 g was added to 169 g of dimethylsulfoxide and 8.7 g of tetramethylammonium hydroxide ($Me_4NOH$, 25% methanol solution, manufactured by SIGMA-ALDRICH) as an alkali, the resultant mixture was stirred under heating at 40°C, to dissolve the pigment completely, thereby to obtain a dark bluish violet pigment-dissolved solution. Placing 112.0 g of the foregoing Polymer compound 1 (25% by mass dimethylsulfoxide solution), 7.8 g of $Me_4NOH$, and 400 g of ion-exchange water into a 5-L beaker, the resultant mixture was stirred until no insoluble matters were observed. To the resultant alkali aqueous solution containing Polymer compound 1 under stirring under cooling on ice, the above mentioned pigment-dissolved solution was discharged rapidly with a pulsation-free liquid feeding pump NP-KX-500 (trade name, manufactured by NIHON SEIMITU KAGAKU CO., LTD.) at 100 ml/min, to obtain Pigment dispersion 19. After stirring the resultant pigment dispersion under cooling on ice for 30 minutes, pH was adjusted to 3.5 by adding dropwise hydrochloric acid, to cause aggregation of pigment particles from the pigment

dispersion. The resultant aggregates were filtrated under reduced pressure with a membrane filter (average pore size: 0.2 μm), followed by washing twice with ion-exchanged water, to obtain desalted and solvent-removed pigment particle dispersion powder a.

Then, to 0.95 g of the thus-obtained powder a, added were 3.8 g of ion-exchange water and 0.85 g of 1N $Me_4NOH$ aqueous solution, so that the pigment content would be 10%, and the resultant mixture was subjected to an ultrasonic dispersion treatment with ultrasonic homogenizer US-150T (trade name, manufactured by NIHONSEIKI KAISHA LTD.) for 8 hours, to obtain a high concentration Pigment dispersion A. The average particle diameter of the Pigment dispersion liquid A measured in accordance with the dynamic light scattering method was 50 nm (TEM average particle diameter: 40 nm), and the viscosity was 7.9 m Pa•sec.

(Comparative example 5) {A comparative example to an embodiment of the present invention described in the foregoing item (6)}

By subjecting the aforementioned pigment particle Dispersion 19 to a combined operation of repeated concentration and addition of pure water by means of an ultrafiltration and concentration apparatus provided with a combination of a multi-air pump LMP-100, an agitation-type ultra holder UHP-76K, a reservoir RP-2, a concentrating and switching cock CHG-1, and an ultrafilter Q0500 076E (all trade names, available from AS ONE Corporation), Pigment dispersion cA with a concentration of 10% was obtained. The average particle diameter of the Pigment dispersion liquid cA measured in accordance with dynamic light scattering method was 50 nm (TEM average particle diameter: 40 nm). The viscosity was very high viscosity of 100 mPa•sec or more.

From the above results, it is apparent that the pigment fine-particles in the dispersions prepared in accordance with the production method of the present invention had nanometer sizes and were extremely small, and that the dispersions had low viscosities. With respect to the above first dispersion liquids (i.e. the dispersion liquids prepared by discharging alkali solutions of the water-insoluble colorants into the poor solvents including a dispersing agent) whose pigment concentrations were low, there was almost no difference in viscosity in Example 19 and Comparative example 5. On the contrary, in the occasion that the concentrations were made higher, the viscosity of the dispersion liquid (the second dispersion liquid) A in Example 19 according to the present invention was remarkably lower than that in Comparative example 5. This indicates that it can be assumed that the filtration step after the aggregation by acid removed the free dispersing agents and the like extremely effectively, leading to the result of a remarkable reduction of viscosity.

(Examples 20 and 21)

Desalted and solvent-removed pigment particle dispersion powders b and c were obtained in the same manner as in Example 19, except that C. I. Pigment Red 122 was replaced to C. I. Pigment Red 254 (Example 20) and C. I. Pigment Violet 19 (Example 21), respectively. Then, both pigment dispersion liquid B and pigment dispersion liquid C each having pigment content of 10% by mass were obtained by subjecting to the ultrasonic dispersion treatment in the same manner as Example in 19. The average particle diameter Mv of the Pigment dispersion liquid B measured in accordance with dynamic light scattering method was 52 nm (TEM average particle diameter: 42 nm). The average particle diameter Mv of the Pigment dispersion liquid C measured in accordance with dynamic light scattering method was 54 nm (TEM average particle diameter: 45 nm).

(Comparative example 6)

Allowing 20 g of C. I. Pigment Red 122, 1.3 g of sodium oleate, and 78.7 g ion-exchange water to mix each other, the resultant mixture was dispersed with a bead mill for 4 hours, to obtain Pigment dispersion D. The average particle diameter Mv of the Pigment dispersion liquid D measured in accordance with dynamic light scattering method was 80.1 nm (TEM average particle diameter: 79.2 nm).

(Comparative examples 7 and 8)

Pigment dispersions E and F (Comparative examples 7 and 8, respectively) were obtained in the same manner as in Comparative example 6, except that C. I. Pigment Red 122 was changed to C. I. Pigment Red 254 (Comparative example 7) and C. I. Pigment Violet 19 (Comparative example 8), respectively. The average particle diameter Mv of the Pigment dispersion liquid E measured in accordance with dynamic light scattering method was 87.5 nm (TEM average particle diameter: 84.9 nm). The average particle diameter Mv of the Pigment dispersion liquid F measured in accordance with dynamic light scattering method was 85.0 nm (TEM average particle diameter: 93.4 nm).

(Preparation of ink compositions)

(Examples 22 to 23)

Any one of the pigment dispersion liquids A to C in an amount of 50 g was mixed with 7.5 g of diethylene glycol, 5 g of glycerol, 5 g trimethylolpropane, 0.2 g of Acetyrenol EH (trade name, manufactured by Kawaken Fine Chemical Co., Ltd.), and 32.3 g of ion-exchanged water, to obtain Ink compositions A to C, respectively.

(Comparative examples 9 to 12)

Any one of the pigment dispersion liquids D to F was diluted with ion-exchanged water, so that the resultant concentrated liquids would have a pigment content of 10% by mass. Then, 50 g of the thus-obtained concentrated liquids were each mixed with 7.5 g of diethylene glycol, 5 g of glycerol, 5 g of trimethylolpropane, 0.2 g of Acetyrenol EH, and 32.3 g of ion-exchanged water. Then, the resultant mixtures were subjected to an ultrasonic treatment, to obtain Ink compositions D to F, respectively.

[Evaluation of light fastness]

A light fastness test was performed in such a manner and conditions that the Ink composition A was applied by spin coating on a glass substrate, and the resultant coating was set in a fade meter and irradiated by a xenon lamp with illuminance of 170,000 lux for 4 days. As a UV filter, there was disposed a TEMPAX filter (trade name, manufactured by Eagle Engineering; the material thereof: TEMPAX glass (trade name, manufactured by SCHOTT)) between the light source and the sample. With respect to the Ink composition A, the absorbance (Abs.) before and after the irradiation were measured, and the residual ratio of absorbance was determined.

$$\text{Residual rate of absorbance } \{(\text{Absorbance after irradiation})/(\text{Absorbance before irradiation})\} \times 100$$

The residual ratio was 82.1%

A fade test was performed in the same manner as the above, except that the Ink composition D was applied by spin coating on a glass substrate. The residual ratio of absorbance of the Ink composition D was 68.5%. From the above results, it is apparent that the dispersion of the present invention enhances the color fastness to light of ink despite that the particle diameter of the pigment fine-particle is extremely small.

[Evaluation of transparency]

Evaluation of transparency was performed by visual inspection with the naked eye, according to the criterion described below, with respect to the Ink compositions A to C and the Ink compositions D to F. Further, each of the above-described Ink compositions was applied with a bar coater on a 60-μm thick polyethylene terephthalate (PET) sheet (trade name: PPL/for laser printer (Xerox film OHP FILM), manufactured by FujiXerox), followed by drying, to produce a printed article. Thereafter, the transparency of the printed area was evaluated by visual inspection with the naked eye, according to the criterion described below.

2: Good - A level capable of clearly identifying letters/characters when observing through the paper on which the letters/characters were described.

1: Poor - A level almost incapable of clearly identifying letters/characters when observing through the paper on which the letters/characters were described.

[Evaluation of discharging property]

Each of the Ink compositions A to F that were prepared as described above was charged into a cartridge of an inkjet printer PX-G930 (manufactured by Seiko-Epson). Using the inkjet printer, a solid image (reflection density: 1.0) was printed at the whole surface of an inkjet paper (a photographic base paper "Gloss", manufactured by Seiko-Epson), to count the number of "white streaks" occurred during print. Evaluation of discharging property was performed according to the criterion as set below:

3: There was no occurrence of white streaks (non-printed area) all over the printed surface.

2: Occurrence of white streaks was slightly observed, which was no problem in practical use.
1: Occurrence of white streaks was frequently observed all over the printed surface, which was not an allowable quality in practical use.
The results of the evaluations are shown in Table 2.

Table 2

| Ink composition | Transparency of Ink composition | Transparency of printed area | Discharging property of ink |
|---|---|---|---|
| A | 2 | 2 | 3 |
| B | 2 | 2 | 2 |
| C | 2 | 2 | 3 |
| D | 1 | 1 | 1 |
| E | 1 | 2 | 1 |
| F | 1 | 1 | 1 |

As is apparent from the results shown in Table 2, the ink compositions prepared using the dispersions of the present invention and the printed articles using the ink compositions had extremely high transparency and were excellent in discharging property of ink.

[Preparation of pigment paste]

To the pigment powder a prepared in Example 19, tetramethylammonium hydroxide was added in a small amount necessary for neutralization, followed by addition of a small amount of No. 5 solvent, manufactured by NIPPON OIL CORPORATION (hereinafter referred to as solvent) and kneading with a super mixer ARE-250 (trade name, manufactured by Thinky Corporation), thereby to obtain a pigment paste a. Similarly, pigment pastes b and c were obtained from the pigment powders b and c prepared in Examples 20 and 21, respectively. To the pigment pastes b and c, tetramethylammonium hydroxide was added in a small amount necessary for neutralization, and was followed by addition of a small amount of the solvent and kneading with the super mixer ARE-250 (trade name, manufactured by Thinky Corporation), thereby to obtain a pigment pastes b and c for use in this example.
Then, hydrochloric acid was added dropwise to the dispersions D to F prepared in Comparative examples 6 to 8, to adjust pH to 3.5, and the pigment particles were aggregated from the dispersions of pigments. Then, the thus-obtained aggregates were filtrated under reduced pressure by using a membrane filter (average pore size 0.2 μm), followed by washing twice with ion-exchanged water. Thus, Dispersion powders d to f containing desalted and solvent-removed pigment particles were obtained, respectively.

(Preparation of resin varnishes)

Rosin-modified phenol resin (TESPOL 1355 (trade name), manufactured by Hitachi Kasei Polymer Co., Ltd.) was dissolved by heating in a mixed solvent of linseed oil and No. 5 solvent, to obtain Resin varnish A (resin concentration: 55% by mass). Further, rosin-modified phenol resin (TESPOL 1304 (trade name), manufactured by Hitachi Kasei Polymer Co., Ltd.) was dissolved by heating in a mixed solvent of linseed oil and No. 5 solvent, to obtain Resin varnish B (resin concentration: 55% by mass).

(Preparation of resin for dispersing pigment)

A mixture of 100 parts of 12-hydroxystearic acid, 10 parts of xylene, and 0.1 parts of tetra-n-butyl titanate was placed in a separable flask equipped with a condenser, a water separator, a thermometer, and a nitrogen-introducing tube, followed by stirring under heating at a temperature of 180°C to 200°C for 6 hours. At this time, under a nitrogen gas stream, the produced water was separated out from the system via the water separator. Then, xylene was removed by distillation under reduced pressure, to obtain a polyester resin having a carboxyl group (hereinafter, referred to as a resin for dispersing pigment). The resultant resin was a pale brown polymer having a mass average molecular mass of 4,000 and an acid value of 30.

(Ink compositions)

Ink bases 1 to 6 were prepared according to the formulation set forth below. It should be noted that at the beginning of the preparation, the pigment pastes a to f were each added with the solvent and subjected to a thorough

ultrasonic treatment, and thereafter other components were added thereto followed by stirring, and then the resultant were kneaded by a three-roll mill. As the solvent, a mixed solvent of diethylene glycol and glycerin (1:1) was used.

(Formulation of ink base)

| | |
|---|---|
| Pigment paste*1 | 40 parts by mass |
| Resin for pigment dispersion | 8 parts by mass |
| Resin varnish A | 42 parts by mass |
| Solvent | 10 parts by mass |

(Note) *1 Any one of the Pigment pastes a to f was used as the pigment paste, and the resultant ink bases were named as Ink Bases 1 to 6, respectively.

Ink compositions 1 to 6 were prepared using the above ink bases in accordance with the formulation set forth below. It should be noted that the Ink base 1 corresponds to the Ink composition 1, and likewise the Ink bases 2 to 6 correspond to the Ink compositions 2 to 6, respectively. As the solvent, a mixed solvent of diethylene glycol and glycerin (1:1) was used.

(Formulation of ink)

| | |
|---|---|
| Ink base | 40 parts by mass |
| Resin varnish B | 50 parts by mass |
| Wax | 5 parts by mass |
| Solvent | 5 parts by mass |

In the above formulation, as the wax, there was used a polyethylene wax compound, manufactured by Shamrock Co. As the Resin vanish B, use was made of a mixture which was prepared by allowing a rosin-modified phenol resin (TESPOL 1304: trade name, manufactured by Hitachi Kasei Polymer Co., Ltd.), linseed oil, and the solvent to mix each other, followed by dissolving under heating (resin concentration: 55% by mass).

In the preparation of the ink composition, the solvent was added to the ink base and subjected to a thorough ultrasonic treatment, and thereafter other components were added thereto followed by stirring, and then the solvent was further added thereto so that the pigment content would be finally 15%.

[Evaluation of transparency]

Any one of the Ink compositions 1 to 6 was applied on a 60-μm thick polyethylene terephthalate (PET) sheet using a bar coater followed by drying, to evaluate transparency, by visual inspection with the naked eye, according to the criterion described below.

2: Good - A level capable of clearly identifying letters/characters when observing through the paper on which the letters/characters were described.

1: Poor - A level almost incapable of clearly identifying letters/characters when observing through the paper on which the letters/characters were described.

[Evaluation of light fastness]

The Ink compositions 1 to 6 were applied on Premium Glossy Photo Papers (trade name, manufactured by Seiko-Epson Co.) using a bar coater, followed by drying. Then, an initial reflection density ($I_0$) of each of the resultant coatings was measured, and then each of the coatings was irradiated by a xenon lamp with illuminance of 170,000 lux for 4 days, to measure a reflection density ($I_1$). A ratio of $I_1/I_0$ x 100 (%) was calculated, and evaluation was performed according to the criterion as set forth below.

3: 95% to 100%
2: 90% or more and less than 95%
1: less than 90%

The results of the evaluations are shown in Table 3.

Table 3

| | Transparency | Light Fastness |
|---|---|---|
| Ink composition 1 (This invention) | 2 | 3 |
| Ink composition 2 (This invention) | 2 | 3 |
| Ink composition 3 (This invention) | 2 | 2 |
| Ink composition 4 (Comparative example) | 1 | 2 |
| Ink composition 5 (Comparative example) | 1 | 2 |
| Ink composition 6 (Comparative example) | 1 | 1 |

As is apparent from the results shown in Table 3, the printed articles using the ink compositions of the present invention were excellent in transparency and also excellent in color fastness to light, despite of their high density.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2008-110136 filed in Japan on April 21, 2008, which is entirely herein incorporated by reference.

## Claims

**1.** A method of producing a water-insoluble colorant dispersion, comprising the steps of:

providing a solution of a water-insoluble colorant dissolved in an aprotic water-soluble organic solvent in the presence of an alkali,
providing an aqueous medium of a polymer compound dissolved therein, which polymer compound has at least one acid group selected from the group consisting of a carboxylic acid group, a sulfonic acid group, a hydroxyl group, and a phosphoric acid group, as its hydrophilic group, and
bringing the solution and the aqueous medium in contact with each other, to form fine particles of the water-insoluble colorant in a medium including water, thereby obtaining a dispersion comprising the fine particles dispersed therein.

**2.** The method of producing a water-insoluble colorant dispersion as claimed in claim 1, wherein the polymer compound is water-insoluble but is water-soluble in the presence of alkali.

**3.** The method of producing a water-insoluble colorant dispersion as claimed in claim 1 or 2, wherein the polymer compound has at least one repeating unit represented by formula (I):

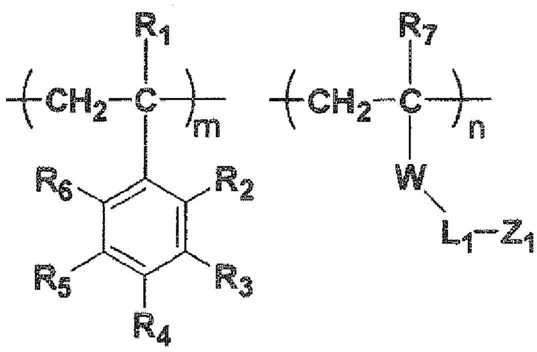

Formula (I)

wherein W represents a single bond or a divalent linking group selected from the group consisting of -CO-, -COO-, $-CONR_8-$, -OCO-, and an arylene group; $L_1$ represents a single bond or a divalent linking group, $R_1$ to $R_8$ each independently represents a hydrogen atom or a substituent; $Z_1$ represents any one of the carboxylic acid group, the sulfonic acid group, the hydroxyl group and the phosphoric acid group; and m and n each represents a copolymerization ratio.

**4.** The method of producing a water-insoluble colorant dispersion as claimed in any one of claims 1 to 3, wherein either or both of the alkalis contained in the solution of the water-soluble colorant and in the aqueous medium is an organic base.

**5.** The method of producing a water-insoluble colorant dispersion as claimed in any one of claims 1 to 3, further comprising the steps of:

forming flocculated aggregates of the fine particles of the water-insoluble colorant, said flocculated aggregates being flocculated and capable of being re-dispersed;
separating the flocculated aggregates from the dispersion;
disaggregating the flocculated aggregates; and
re-dispersing the fine particles into a re-dispersion medium.

**6.** The method of producing a water-insoluble colorant dispersion as claimed in any one of claims 1 to 4, further comprising the step of:

adding an alkali in the re-dispersing step of the fine particles into the re-dispersion medium by disaggregating the flocculated aggregates.

**7.** The method of producing a water-insoluble colorant dispersion as claimed in any one of claims 1 to 6, wherein the re-dispersion medium is an aqueous dispersion containing water.

**8.** The method of producing a water-insoluble colorant dispersion as claimed in any one of claims 1 to 7, further comprising the step of:

heating the dispersion.

**9.** A dispersion of a water-insoluble colorant obtained by the method as claimed in any one of claims 1 to 8, comprising the fine particles of the water-insoluble colorant, the alkali, and the polymer compound having an acid group.

**10.** A dispersion of a water-insoluble colorant obtained by the method as claimed in any one of claims 1 to 8, wherein the fine particles containing the water-insoluble colorant show a color same as to that shown by the fine particles themselves in the state of crystals thereof, and wherein when the absorbance peak of the dispersion in a visible light region is set to 1, a light scattering intensity is 30,000 cps or less.

**11.** The dispersion of a water-insoluble colorant as claimed in claim 9 or 10, wherein the average particle diameter of the fine particles containing the water-insoluble colorant is from 5 to 60 nm.

**12.** The dispersion of a water-insoluble colorant as claimed in any one of claims 9 to 11, wherein the water-insoluble colorant is a pigment.

**13.** The dispersion of a water-insoluble colorant as claimed in any one of claims 9 to 12, wherein the water-insoluble colorant is an organic pigment selected from the group consisting of quinacridone compound pigments, diketopyrrolopyrrole compound pigments, mono azo yellow organic pigments, condensed azo organic pigments, quinophthalone compound pigments, benz-imidazolone compound pigments, and disazo yellow pigments.

**14.** The dispersion of a water-insoluble colorant as claimed in any one of claims 9 to 13, wherein the water-insoluble colorant is an organic pigment selected from the group consisting of quinacridone compound pigments, diketopyrrolopyrrole compound pigments, and azo yellow organic pigments.

**15.** The dispersion of a water-insoluble colorant as claimed in any one of claims 9 to 14, wherein the water-insoluble colorant is an azo yellow organic pigment.

**16.** A recording liquid produced by using the dispersion of a water-insoluble colorant as claimed in any one of claims 9 to 15, wherein the water-insoluble colorant is contained in an amount of 0.1 to 20% by mass with respect to a total mass of the recording liquid.

**17.** The recording liquid as claimed in claim 16, wherein the recording liquid is an inkjet recording liquid.

**18.** An ink set, comprising the recording liquid as claimed in claim 16 or 17.

**19.** A printed article having an image recorded thereon by a provider of, with a medium, the recording liquid as claimed in claim 16 or 17, or the recording liquid by using the ink set as claimed in claim 18, wherein the provider has a function to adjust an applied amount or concentration of the recording liquid, thereby light-to-dark contrast of the printed article is adjusted.

**20.** An image-forming method, which comprises:

providing, with a medium, the recording liquid as claimed in claim 16 or 17, or the recording liquid by using the ink set as claimed in claim 18; and
recording an image with the recording liquid.

**21.** An image-forming apparatus, having a recorder of an image, by providing, with a medium, the recording liquid as claimed in claim 16 or 17, or the recording liquid by using the ink set as claimed in claim 18.

Europäisches Patentamt
European Patent Office
Office européen des brevets

# EUROPEAN SEARCH REPORT

Application Number
EP 09 15 8340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br>Y | EP 1 693 423 A (FUJI PHOTO FILM CO LTD [JP]) 23 August 2006 (2006-08-23)<br>* paragraphs [0006] - [0008], [0078], [0094], [0095], [0102]; claims 2,4,6,8,9,19-22 * | 1-21<br><br><br><br><br>1-21 | INV.<br>C08J3/03<br>C08K5/00<br>C09B67/00<br>C09D11/00<br>C09D17/00 |
| X<br><br><br><br>Y | US 2007/012221 A1 (MAETA HIDEKI [JP] ET AL) 18 January 2007 (2007-01-18)<br>* paragraphs [0001] - [0003], [0098]; claims 1,10; example 1 * | 1-21<br><br><br><br>1-21 | |
| D,X | EP 1 364 997 A (CANON KK [JP]) 26 November 2003 (2003-11-26)<br>* paragraph [0035]; claims 7-21 * | 1-21 | |
| Y | WO 01/44389 A (PPG IND OHIO INC [US]) 21 June 2001 (2001-06-21)<br>* claims 1-20 * | 1-21 | TECHNICAL FIELDS SEARCHED (IPC) |
| Y | WO 2004/085548 A (CONSTR RES & TECH GMBH [DE]) 7 October 2004 (2004-10-07)<br>* claim 26 * | 1-21 | C08J<br>C08K<br>C09B<br>C09D<br>C09C |

The present search report has been drawn up for all claims

1

| Place of search | Date of completion of the search | Examiner |
|---|---|---|
| Munich | 11 August 2009 | olde Scheper, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 15 8340

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2009

| Patent document cited in search report | Publication date | Patent family member(s) | Publication date |
|---|---|---|---|
| EP 1693423 A | 23-08-2006 | NONE | |
| US 2007012221 A1 | 18-01-2007 | JP 2007039643 A | 15-02-2007 |
| EP 1364997 A | 26-11-2003 | CN 1462778 A | 24-12-2003 |
| | | JP 2004043776 A | 12-02-2004 |
| | | SG 114621 A1 | 28-09-2005 |
| | | TW 283697 B | 11-07-2007 |
| | | US 2004009294 A1 | 15-01-2004 |
| WO 0144389 A | 21-06-2001 | AU 2109701 A | 25-06-2001 |
| | | US 2003032716 A1 | 13-02-2003 |
| | | US 2002123559 A1 | 05-09-2002 |
| WO 2004085548 A | 07-10-2004 | BR PI0408942 A | 04-04-2006 |
| | | CA 2523686 A1 | 07-10-2004 |
| | | CL 5552004 A1 | 25-02-2005 |
| | | EC SP056035 A | 27-01-2006 |
| | | EP 1611215 A2 | 04-01-2006 |
| | | JP 2006521267 T | 21-09-2006 |
| | | MX PA05010352 A | 08-03-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004043776 A
- JP 2003026972 A
- JP 2003113341 A
- JP 2006342316 A
- JP 2007119586 A
- WO 2006121018 A
- JP 2005307154 A
- JP 2007039643 A
- JP 3936558 B
- JP 2008110136 A